# EUROPEAN PATENT APPLICATION

(11) **EP 4 794 371 A1**
(43) Date of publication of application: **19.08.2026**
(21) Application number: 24884433.4
(22) Date of filing: 16.10.2024
(51) Int. Cl.: H04W 24/02, H04W 4/02

(54) **COMMUNICATION METHOD AND APPARATUS**

(30) Priority: 03.11.2023 CN 202311463312
(71) Applicant: HUAWEI TECHNOLOGIES CO., LTD., Shenzhen 518129 (CN)
(72) Inventor: ZHAO, Xian, Shenzhen, Guangdong 518129 (CN); XU, Ruiyue, Shenzhen, Guangdong 518129 (CN); LI, Xianming, Shenzhen, Guangdong 518129 (CN); CAO, Longyu, Shenzhen, Guangdong 518129 (CN)
(74) Representative: MERH-IP Matias Erny Reichl Hoffmann Patentanwälte PartG mbB
(86) International application number: PCT/CN2024/125275
(87) International publication number: WO 2025/092429

(57) **Abstract**

This application relates to the field of communication technologies, and provides a communication method and apparatus, to ensure, without affecting network quality in each region, network quality experienced by a terminal during movement. In the method, a management service consumer may obtain, from a first management service provider entity, a first service assurance satisfaction degree that can reflect network quality in a first region within first duration, and may determine a moving policy for the terminal in the first region within the first duration based on the first service assurance satisfaction degree. For example, the management service consumer may determine the moving policy based on the network quality in the first region within the first duration and a region with good network quality in the first region. In other words, network quality in a region corresponding to the moving policy is good within the first duration. In this way, network quality experienced by the terminal when the terminal moves within the first duration based on the moving policy can be ensured without affecting the network quality in each region.

## Description

This application claims priority to Chinese Patent Application No. 202311463312.1, filed with the China National Intellectual Property Administration on November 3, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Currently, to ensure network quality experienced by a terminal in a movement process, a moving route is usually matched with coverage areas of base stations after the moving route is provided for the terminal, to determine base stations whose service ranges cover the moving route; and configurations of the base stations, for example, tilt angles of the base stations, are adjusted, to ensure network quality experienced by the terminal during movement along the moving route.

However, adjusting a configuration of a base station causes more network resources to be concentrated, when the terminal moves, on a region in which the terminal is located. In this case, network resources in another region (namely, a region other than the region in which the terminal is located) are reduced, to be specific, network quality experienced by a terminal in the another region cannot be ensured. Therefore, how to ensure, without affecting network quality in another region, the network quality experienced by the terminal during the movement is a hot topic currently discussed.

### SUMMARY

Embodiments of this application provide a communication method and apparatus, to ensure, without affecting network quality in each region, network quality experienced by a terminal during movement.

To achieve the foregoing objective, this application uses the following technical solutions.

According to a first aspect, a communication method is provided. The method includes: A first management service provider entity receives a first message from a management service consumer, and sends, to the management service consumer based on the first message, a second message indicating a first service assurance satisfaction degree. The first message is for requesting to evaluate a service assurance satisfaction degree in a first region within first duration, the service assurance satisfaction degree represents a degree of matching between network performance and a network performance requirement, and the first service assurance satisfaction degree represents a degree of matching between network performance in the first region within the first duration and the network performance requirement.

It can be learned from the method according to the first aspect and a method according to a second aspect that, the management service consumer may obtain, from the first management service provider entity, the first service assurance satisfaction degree that can reflect network quality in the first region within the first duration, and may determine a moving policy for a terminal in the first region within the first duration based on the first service assurance satisfaction degree. For example, the management service consumer may determine the moving policy from a region with good network quality in the first region based on the network quality in the first region within the first duration. In other words, network quality in a region corresponding to the moving policy is good within the first duration. In this way, network quality experienced by the terminal when the terminal moves within the first duration based on the moving policy can be ensured without affecting network quality in each region.

In a possible design scheme, the first message includes at least one of the following: information indicating the first region or information indicating the first duration. It may be understood that the management service consumer may flexibly determine the first region and the first duration based on an actual situation.

In a possible design scheme, the first message includes at least one of the following: an evaluation mode, an evaluation granularity requirement, or the network performance requirement, where the evaluation mode indicates to divide a region into a plurality of grids, and reflect a service assurance satisfaction degree in the region at a grid granularity, and the evaluation granularity requirement indicates a size of a plurality of grids included in a region. It may be understood that the network performance requirement may be a throughput requirement, a latency requirement, or the like, and may be set differently based on a specific situation. It may be further understood that the management service consumer may flexibly determine the evaluation mode, the evaluation granularity requirement, or the network performance requirement based on an actual situation.

In a possible design scheme, the first region includes a plurality of first grids, the first message is specifically for requesting to evaluate respective service assurance satisfaction degrees in the plurality of first grids, time periods for evaluating the service assurance satisfaction degrees in the plurality of first grids are at least partially different, and the time periods are within the first duration. It may be understood that when the first region is divided into the plurality of first grids, time periods for which the terminal moves in the plurality of first grids are different. For example, the terminal moves from left to right, and the first region is divided into first grids in four rows and three columns, namely, 12 first grids in total. In this case, time periods for which the terminal moves in first grids in a 1^{st} column are all a 1^{st} time period, time periods for which the terminal moves in first grids in a 2^{nd} column are all a 2^{nd} time period, and time periods for which the terminal moves in first grids in a 3^{rd} column are all a 3^{rd} time period. The 1^{st} time period, the 2^{nd} time period, and the 3^{rd} time period are all different, and the three time periods form the first duration. The service assurance satisfaction degrees in the plurality of first grids are evaluated in the at least partially different time periods, so that evaluation results can be more practical, and a moving policy that can better ensure the network quality experienced by the terminal during the movement can be determined.

In a possible design scheme, the first message includes at least one of the following: a continuous-evaluation indication, a first time interval, a second time interval, a reporting event, or a moving speed, where the continuous-evaluation indication indicates that time periods for respectively evaluating service assurance satisfaction degrees in a plurality of grids included in a region are at least partially different; the first time interval indicates a difference between time periods for evaluating service satisfaction degrees in two grids, and the two grids are two neighboring grids that are in a plurality of grids included in a region and in which the service satisfaction degrees are evaluated within different time periods; the second time interval is a time difference between every two consecutive times of reporting a service assurance satisfaction degree in a region when the service assurance satisfaction degree in the region is periodically reported; the reporting event indicates that reporting of a service assurance satisfaction degree in a region is triggered based on a preset event that occurs in a process of evaluating the service assurance satisfaction degree in the region; and the moving speed indicates a moving speed in a region. In other words, the management service consumer may select different parameters based on an actual situation, and indicate the parameters to the first management service provider entity, so that the obtained first service assurance satisfaction degree is more practical, and the moving policy that can better ensure the network quality experienced by the terminal during the movement is determined.

In a possible design scheme, the second message includes a service assurance satisfaction degree in each first grid in the plurality of first grids included in the first region. This helps the management service consumer determine the moving policy based on the plurality of first grids and the service assurance satisfaction degree in each first grid.

In a possible design scheme, the second message includes at least one of the following: respective identifiers of the plurality of first grids, the respective service assurance satisfaction degrees in the plurality of first grids, respective locations of the plurality of first grids, or time information, where the time information indicates a time period for evaluating the service assurance satisfaction degree in each first grid in the plurality of first grids. This helps the management service consumer determine the moving policy based on the second message.

In a possible design scheme, that the first management service provider entity sends, to the management service consumer based on the first message, the second message indicating the first service assurance satisfaction degree includes: The first management service provider entity obtains the first service assurance satisfaction degree from a second management service provider entity based on the first message. The first management service provider entity sends the second message to the management service consumer based on the first service assurance satisfaction degree. It may be understood that the first management service provider entity may obtain the first service assurance satisfaction degree from another entity (for example, the second management service provider entity), or the first management service provider entity may generate the first service assurance satisfaction degree. A specific obtaining manner is related to a setting of a management system. The first management service provider entity may flexibly select, based on a specific setting, the manner of obtaining the first service assurance satisfaction degree.

Optionally, that the first management service provider entity obtains the first service assurance satisfaction degree from the second management service provider entity based on the first message includes: The first management service provider entity sends a third message to the second management service provider entity based on the first message, and receives a fourth message from the second management service provider entity, where the third message is for requesting to evaluate the service assurance satisfaction degree in the first region within the first duration, and the fourth message indicates the first service assurance satisfaction degree.

Further, the third message includes at least one of the following: the information indicating the first duration, region information, or information indicating at least one network element, where the region information indicates the plurality of first grids obtained by dividing the first region, and a service range of the at least one network element includes the first region. It may be understood that the first management service provider entity may obtain, based on the first region, the region information and the information indicating the at least one network element, and the second management service provider entity may construct a network twin model based on the region information and the information indicating the at least one network element, to obtain the first service assurance satisfaction degree by using the network twin model. In this way, the second management service provider entity does not need to obtain, based on the first region, the region information and the information indicating the at least one network element, to reduce overheads of the second management service provider entity.

Further, the region information includes at least one of the following: the respective identifiers of the plurality of first grids, a size of the plurality of first grids, or the respective locations of the plurality of first grids. In this way, the second management service provider entity can accurately construct the network twin model based on the region information.

Further, the third message includes at least one of the following: the information indicating the first duration or the information indicating the first region. It may be understood that, region information and information indicating at least one network element may be obtained based on the first region, where the region information indicates the plurality of first grids obtained by dividing the first region, and a service range of the at least one network element includes the first region. The second management service provider entity may construct a network twin model based on the region information and the information indicating the at least one network element, to obtain the first service assurance satisfaction degree by using the network twin model. In other words, the first management service provider entity does not need to obtain, based on the first region, the region information and the information indicating the at least one network element, to reduce overheads of the first management service provider entity.

Further, the third message includes at least one of the following: the evaluation mode or the network performance requirement, where the evaluation mode indicates to divide a region into a plurality of grids, and reflect a service assurance satisfaction degree in the region at a grid granularity. In this way, the first management service provider entity may indicate, to the second management service provider entity based on an actual situation, requirements for determining the first service assurance satisfaction degree.

Further, the first region includes the plurality of first grids, the third message is specifically for requesting to evaluate the respective service assurance satisfaction degrees in the plurality of first grids, the time periods for evaluating the service assurance satisfaction degrees in the plurality of first grids are at least partially different, and the time periods are within the first duration. It may be understood that, when the first region is divided into the plurality of first grids, the time periods for which the terminal moves in the plurality of first grids are different. The service assurance satisfaction degrees in the plurality of first grids are evaluated in the at least partially different time periods, so that the evaluation results can be more practical, and the moving policy that can better ensure the network quality experienced by the terminal during the movement can be determined.

Further, the third message includes at least one of the following: the continuous-evaluation indication, the first time interval, the second time interval, the reporting event, or the moving speed, where the continuous-evaluation indication indicates that time periods for respectively evaluating service assurance satisfaction degrees in a plurality of grids included in a region are at least partially different; the first time interval indicates a difference between time periods for evaluating service satisfaction degrees in two grids, and the two grids are two neighboring grids that are in a plurality of grids included in a region and in which the service satisfaction degrees are evaluated within different time periods; the second time interval indicates a time difference between every two consecutive times of reporting a service assurance satisfaction degree in a region when the service assurance satisfaction degree in the region is periodically reported; the reporting event indicates that reporting of a service assurance satisfaction degree in a region is triggered based on a preset event that occurs in a process of evaluating the service assurance satisfaction degree in the region; and the moving speed indicates a moving speed in a region. In other words, the first management service provider entity may determine different parameters based on the first message, and indicate the parameters to the second management service provider entity by using the third message, so that the obtained first service assurance satisfaction degree is more practical, and the moving policy that can better ensure the network quality experienced by the terminal during the movement is determined.

Further, that the first management service provider entity sends the third message to the second management service provider entity based on the first message includes: The first management service provider entity obtains, based on the first message, at least one of the following information: the region information or the information indicating the at least one network element. The first management service provider entity sends the third message to the second management service provider entity based on the first message and the at least one of the following information. It may be understood that the region information and the information indicating the at least one network element may be obtained based on the first region, and the second management service provider entity may construct the network twin model based on the region information and the information indicating the at least one network element, to obtain the first service assurance satisfaction degree by using the network twin model. In this way, the second management service provider entity does not need to obtain, based on the first region, the region information and the information indicating the at least one network element, to reduce the overheads of the second management service provider entity.

Further, the fourth message includes the service assurance satisfaction degree in each first grid in the plurality of first grids included in the first region. A service assurance satisfaction degree in each region in the first region is indicated by using the plurality of first grids, to help the management service consumer subsequently determine the moving policy based on the service assurance satisfaction degree in each first grid.

Further, the fourth information includes at least one of the following: the respective identifiers of the plurality of first grids, the respective service assurance satisfaction degrees in the plurality of first grids, or the time information, where the time information indicates the time period for evaluating the service assurance satisfaction degree in each first grid in the plurality of first grids. This helps the management service consumer determine the moving policy based on related information, such as the service assurance satisfaction degrees and the time information, of the plurality of first grids.

According to a second aspect, a communication method is provided. The method includes: A management service consumer sends a first message to a first management service provider entity. The management service consumer receives, from the first management service provider entity, a second message indicating a first service assurance satisfaction degree, and determines a moving policy in a first region within first duration based on the second message. The first message is for requesting to evaluate a service assurance satisfaction degree in the first region within the first duration, the service assurance satisfaction degree represents a degree of matching between network performance and a network performance requirement, and the first service assurance satisfaction degree represents a degree of matching between network performance in the first region within the first duration and the network performance requirement.

In a possible design scheme, the first message includes at least one of the following: information indicating the first region or information indicating the first duration.

In a possible design scheme, the first message includes at least one of the following: an evaluation mode, an evaluation granularity requirement, or the network performance requirement, where the evaluation mode indicates to divide a region into a plurality of grids, and reflect a service assurance satisfaction degree in the region at a grid granularity, and the evaluation granularity requirement indicates a size of a plurality of grids included in a region.

In a possible design scheme, the first region includes a plurality of first grids, the first message is specifically for requesting to evaluate respective service assurance satisfaction degrees in the plurality of first grids, time periods for evaluating the service assurance satisfaction degrees in the plurality of first grids are at least partially different, and the time periods are within the first duration.

In a possible design scheme, the first message includes at least one of the following: a continuous-evaluation indication, a first time interval, a second time interval, a reporting event, or a moving speed, where the continuous-evaluation indication indicates that time periods for respectively evaluating service assurance satisfaction degrees in a plurality of grids included in a region are at least partially different; the first time interval indicates a difference between time periods for evaluating service satisfaction degrees in two grids, and the two grids are two neighboring grids that are in a plurality of grids included in a region and in which the service satisfaction degrees are evaluated within different time periods; the second time interval is a time difference between every two consecutive times of reporting a service assurance satisfaction degree in a region when the service assurance satisfaction degree in the region is periodically reported; the reporting event indicates that reporting of a service assurance satisfaction degree in a region is triggered based on a preset event that occurs in a process of evaluating the service assurance satisfaction degree in the region; and the moving speed indicates a moving speed in a region.

In a possible design scheme, the second message includes a service assurance satisfaction degree in each first grid in the plurality of first grids included in the first region.

In a possible design scheme, the second message includes at least one of the following: respective identifiers of the plurality of first grids, the respective service assurance satisfaction degrees in the plurality of first grids, respective locations of the plurality of first grids, or time information, where the time information indicates a time period for evaluating the service assurance satisfaction degree in each first grid in the plurality of first grids.

In addition, for technical effects of the method according to the second aspect, refer to the technical effects of the method according to the first aspect. Details are not described herein again.

According to a third aspect, a communication method is provided. The method includes: A second management service provider entity receives a third message from a first management service provider entity, and sends, to the first management service provider entity based on the third message, a fourth message indicating a first service assurance satisfaction degree. The third message is for requesting to evaluate a service assurance satisfaction degree in a first region within first duration, the service assurance satisfaction degree represents a degree of matching between network performance and a network performance requirement, and the first service assurance satisfaction degree represents a degree of matching between network performance in the first region within the first duration and the network performance requirement.

In a possible design scheme, the third message includes at least one of the following: information indicating the first duration, region information, or information indicating at least one network element, where the region information indicates a plurality of first grids obtained by dividing the first region, and a service range of the at least one network element includes the first region.

Optionally, the region information includes at least one of the following: respective identifiers of the plurality of first grids, a size of the plurality of first grids, or respective locations of the plurality of first grids.

In a possible design scheme, the third message includes at least one of the following: an evaluation mode or the network performance requirement, where the evaluation mode indicates to divide a region into a plurality of grids, and reflect a service assurance satisfaction degree in the region at a grid granularity.

In a possible design scheme, the first region includes the plurality of first grids, the third message is specifically for requesting to evaluate respective service assurance satisfaction degrees in the plurality of first grids, time periods for evaluating the service assurance satisfaction degrees in the plurality of first grids are at least partially different, and the time periods are within the first duration.

In a possible design scheme, the third message includes at least one of the following: a continuous-evaluation indication, a first time interval, a second time interval, a reporting event, or a moving speed, where the continuous-evaluation indication indicates that time periods for respectively evaluating service assurance satisfaction degrees in a plurality of grids included in a region are at least partially different; the first time interval indicates a difference between time periods for evaluating service satisfaction degrees in two grids, and the two grids are two neighboring grids that are in a plurality of grids included in a region and in which the service satisfaction degrees are evaluated within different time periods; the second time interval is a time difference between every two consecutive times of reporting a service assurance satisfaction degree in a region when the service assurance satisfaction degree in the region is periodically reported; the reporting event indicates that reporting of a service assurance satisfaction degree in a region is triggered based on a preset event that occurs in a process of evaluating the service assurance satisfaction degree in the region; and the moving speed indicates a moving speed in a region.

Optionally, before that the second management service provider entity sends, to the first management service provider entity based on the third message, the fourth message indicating the first service assurance satisfaction degree, the method according to the third aspect further includes: The second management service provider entity constructs a network twin model based on the region information and the information indicating the at least one network element. The second management service provider entity obtains the first service assurance satisfaction degree by using the network twin model based on the third message.

In a possible design scheme, the fourth message includes a service assurance satisfaction degree in each first grid in the plurality of first grids included in the first region.

Optionally, the fourth message includes at least one of the following: the respective identifiers of the plurality of first grids, the respective service assurance satisfaction degrees in the plurality of first grids, or time information, where the time information indicates a time period for evaluating the service assurance satisfaction degree in each first grid in the plurality of first grids.

In addition, for technical effects of the method according to the third aspect, refer to the technical effects of the method according to the first aspect. Details are not described herein again.

According to a fourth aspect, a communication method is provided. The method includes: A first management service provider entity receives a first message from a management service consumer, and sends, to the management service consumer based on the first message, a second message indicating a first moving policy. The first message is for requesting to provide a moving policy from a first start point to a first end point within first duration, the first moving policy indicates a moving policy from the first start point to the first end point within the first duration, a service assurance satisfaction degree corresponding to the first moving policy meets a preset requirement, and the service assurance satisfaction degree represents a degree of matching between network performance and a network performance requirement.

It can be learned from the method according to the fourth aspect and a method according to a fifth aspect that, that the service assurance satisfaction degree corresponding to the first moving policy meets the preset requirement means: Network quality corresponding to the first moving policy is good. In other words, when a terminal moves along a route within the first duration, network quality experienced by the terminal during the movement can be ensured. The first moving policy corresponding to the service assurance satisfaction degree that meets the preset requirement is provided by the first management service provider entity, so that the network quality experienced by the terminal when the terminal moves within the first duration based on the first moving policy can be ensured without affecting network quality in each region.

In a possible design scheme, the first message includes at least one of the following: information indicating the first start point, information indicating the first end point, or information indicating the first duration. It may be understood that the management service consumer may flexibly determine the first start point, the first end point, and the first duration based on an actual situation.

In a possible design scheme, the first message includes at least one of the following: a policy planning indication, the network performance requirement, an evaluation granularity requirement, a passing point, a forbidden region, or a policy preference, where the policy planning indication indicates a request for providing a moving policy; the evaluation granularity requirement indicates a size of each grid in a plurality of grids included in a region, and the region includes the first start point and the first end point; the passing point indicates a place that needs to be passed through; and the forbidden region indicates a place or a region that cannot be passed through. It may be understood that the network performance requirement may be a throughput requirement, a latency requirement, or the like, and may be set differently based on a specific situation. It may be further understood that the management service consumer may flexibly determine the evaluation granularity requirement or the network performance requirement based on an actual situation.

In a possible design scheme, the second message includes at least one of the following: a first route, an identifier of the first route, a service assurance satisfaction degree on the first route, or a feature of the first route, where the first route is a route from the first start point to the first end point within the first duration, and the service assurance satisfaction degree represents a degree of matching between network performance and the network performance requirement. It may be understood that when the first route includes a plurality of routes, the service assurance satisfaction degree on the first route and/or the feature of the first route are/is sent to the management service consumer, to help the management service consumer determine a to-be-applied route from the first route based on the service assurance satisfaction degree on the first route and/or the feature of the first route.

In a possible design scheme, that the first management service provider entity sends, to the management service consumer based on the first message, the second message indicating the first moving policy includes: The first management service provider entity obtains the first moving policy from a second management service provider entity based on the first message, and sends the second message to the management service consumer based on the first moving policy. It may be understood that the first management service provider entity may obtain the first moving policy from another entity (for example, the second management service provider entity), or the first management service provider entity may generate the first moving policy. A specific obtaining manner is related to a setting of a management system. The first management service provider entity may flexibly select, based on a specific setting, the manner of obtaining the first moving policy.

Optionally, that the first management service provider entity obtains the first moving policy from the second management service provider entity based on the first message includes: The first management service provider entity sends a third message to the second management service provider entity based on the first message, where the third message is for requesting to provide the moving policy from the first start point to the first end point within the first duration. The first management service provider entity receives, from the second management service provider entity, a fourth message indicating the first moving policy.

Further, the third message includes at least one of the following: the information indicating the first start point, the information indicating the first end point, the information indicating the first duration, region information, or information indicating at least one network element, where the region information indicates a plurality of first grids obtained by dividing a first region, a service range of the at least one network element includes the first region, and the first region includes the first start point and the first end point. It may be understood that the second management service provider entity may construct a network twin model based on the region information and the information indicating the at least one network element, to obtain the first moving policy by using the network twin model. In this way, the second management service provider entity does not need to obtain, based on the first start point and the first end point, the region information and the information indicating the at least one network element, to reduce overheads of the second management service provider entity.

Further, the region information includes at least one of the following: respective identifiers of the plurality of first grids, a size of the plurality of first grids, or respective locations of the plurality of first grids. In this way, the second management service provider entity can accurately construct the network twin model based on the region information.

Further, the third message includes at least one of the following: an evaluation mode, the policy planning indication, the network performance requirement, the passing point, the forbidden region, or the policy preference, where the evaluation mode indicates to divide a region into a plurality of grids, and reflect a service assurance satisfaction degree in the region at a grid granularity; the policy planning indication indicates a request for providing a moving policy; the evaluation granularity requirement indicates a size of each grid in a plurality of grids included in a region; the passing point indicates a place that needs to be passed through in a region; and the forbidden region indicates a place or a region that cannot be passed through in a region. In other words, the first management service provider entity may determine different parameters based on the first message, and indicate the parameters to the second management service provider entity by using the third message, so that the obtained first moving policy meets a requirement of the first management service provider entity.

Further, the fourth message includes at least one of the following: the first route, the identifier of the first route, the service assurance satisfaction degree on the first route, or the feature of the first route, where the first route is the route from the first start point to the first end point within the first duration, and the service assurance satisfaction degree represents the degree of matching between the network performance and the network performance requirement. This helps the management service consumer determine the to-be-applied route from the first route based on the service assurance satisfaction degree on the first route and/or the feature of the first route when the first route includes a plurality of routes.

According to a fifth aspect, a communication method is provided. The method includes: A management service consumer sends a first message to a first management service provider entity. The management service consumer receives, from the first management service provider entity, a second message indicating a first moving policy, and determines a to-be-applied moving policy based on the second message. The first message is for requesting to provide a moving policy from a first start point to a first end point within first duration, the first moving policy indicates a moving policy from the first start point to the first end point within the first duration, a service assurance satisfaction degree corresponding to the first moving policy meets a preset requirement, and the service assurance satisfaction degree represents a degree of matching between network performance and a network performance requirement.

In a possible design scheme, the first message includes at least one of the following: information indicating the first start point, information indicating the first end point, or information indicating the first duration.

In a possible design scheme, the first message includes at least one of the following: a policy planning indication, the network performance requirement, an evaluation granularity requirement, a passing point, a forbidden region, or a policy preference, where the policy planning indication indicates a request for providing a moving policy; the evaluation granularity requirement indicates a size of each grid in a plurality of grids included in a region, and the region includes the first start point and the first end point; the passing point indicates a place that needs to be passed through; and the forbidden region indicates a place or a region that cannot be passed through.

In a possible design scheme, the second message includes at least one of the following: a first route, an identifier of the first route, a service assurance satisfaction degree on the first route, or a feature of the first route, where the first route is a route from the first start point to the first end point within the first duration, and the service assurance satisfaction degree represents a degree of matching between network performance and the network performance requirement.

In addition, for technical effects of the method according to the fifth aspect, refer to the technical effects of the method according to the fourth aspect. Details are not described herein again.

According to a sixth aspect, a communication method is provided. The method includes: A second management service provider entity receives a third message from a first management service provider entity, and sends, to the first management service provider entity based on the third message, a fourth message indicating a first moving policy. The third message is for requesting to provide a moving policy from a first start point to a first end point within first duration, the first moving policy indicates a moving policy from the first start point to the first end point within the first duration, a service assurance satisfaction degree corresponding to the first moving policy meets a preset requirement, and the service assurance satisfaction degree represents a degree of matching between network performance and a network performance requirement.

In a possible design scheme, the third message includes at least one of the following: information indicating the first start point, information indicating the first end point, information indicating the first duration, region information, or information indicating at least one network element, where the region information indicates a plurality of first grids obtained by dividing a first region, a service range of the at least one network element includes the first region, and the first region includes the first start point and the first end point.

Optionally, the region information includes at least one of the following: respective identifiers of the plurality of first grids, a size of the plurality of first grids, or respective locations of the plurality of first grids.

In a possible design scheme, the third message includes at least one of the following: an evaluation mode, a policy planning indication, the network performance requirement, a passing point, a forbidden region, or a policy preference, where the evaluation mode indicates to divide a region into a plurality of grids, and reflect a service assurance satisfaction degree in the region at a grid granularity; the policy planning indication indicates a request for providing a moving policy that meets the preset requirement; the evaluation granularity requirement indicates a size of each grid in a plurality of grids included in a region; the passing point indicates a place that needs to be passed through in a region; and the forbidden region indicates a place or a region that cannot be passed through in a region.

Optionally, before that the second management service provider entity sends, to the first management service provider entity based on the third message, the fourth message indicating the first moving policy, the method according to the sixth aspect further includes: The second management service provider entity constructs a network twin model based on the region information and the information indicating the at least one network element. The second management service provider entity obtains the first moving policy by using the network twin model based on the third message.

In a possible design scheme, the fourth message includes at least one of the following: a first route, an identifier of the first route, a service assurance satisfaction degree on the first route, or a feature of the first route, where the first route is a route from the first start point to the first end point within the first duration, and the service assurance satisfaction degree represents a degree of matching between network performance and the network performance requirement.

In addition, for technical effects of the method according to the sixth aspect, refer to the technical effects of the method according to the fourth aspect. Details are not described herein again.

According to a seventh aspect, a communication method is provided. The method includes: A first management service provider entity performs the method according to the first aspect, and a management service consumer performs the method according to the second aspect. Alternatively, a first management service provider entity performs the method according to the first aspect, a management service consumer performs the method according to the second aspect, and a second management service provider entity performs the method according to the third aspect.

In addition, for technical effects of the method according to the seventh aspect, refer to the technical effects of the methods according to the first aspect to the third aspect. Details are not described herein again.

According to an eighth aspect, a communication method is provided. The method includes: A first management service provider entity performs the method according to the fourth aspect, and a management service consumer performs the method according to the fifth aspect. Alternatively, a first management service provider entity performs the method according to the fourth aspect, a management service consumer performs the method according to the fifth aspect, and a second management service provider entity performs the method according to the sixth aspect.

In addition, for technical effects of the method according to the eighth aspect, refer to the technical effects of the methods according to the fourth aspect to the sixth aspect. Details are not described herein again.

According to a ninth aspect, a communication apparatus is provided. The communication apparatus includes a module configured to perform the method according to any one of the first aspect to the sixth aspect, for example, a transceiver module and a processing module. For example, the transceiver module is configured to perform receiving and sending functions of the communication apparatus, and the processing module is configured to perform a function of the communication apparatus other than the receiving and sending functions.

Optionally, the transceiver module may include a sending module and a receiving module. The sending module is configured to implement the sending function of the communication apparatus according to the ninth aspect, and the receiving module is configured to implement the receiving function of the communication apparatus according to the ninth aspect.

Optionally, the communication apparatus according to the ninth aspect may further include a storage module. The storage module stores a program or instructions. When the processing module executes the program or the instructions, the communication apparatus is caused to perform the method according to any one of the first aspect to the sixth aspect.

It may be understood that the communication apparatus according to the ninth aspect may be a terminal, for example, a remote device, may be a chip (system) or another part or component that may be disposed in the terminal, or may be an apparatus that includes the terminal. This is not limited in this application.

In addition, for technical effects of the communication apparatus according to the ninth aspect, refer to the technical effects of the method according to any one of the implementations of the first aspect to the sixth aspect. Details are not described herein again.

According to a tenth aspect, a communication apparatus is provided. The communication apparatus includes a processor. When the processor executes computer instructions, the communication apparatus is caused to perform the method according to any one of the possible implementations of the first aspect to the sixth aspect.

In a possible design scheme, the communication apparatus according to the tenth aspect may further include a transceiver. The transceiver may be a transceiver circuit or an interface circuit. The transceiver may be used by the communication apparatus according to the tenth aspect to communicate with another communication apparatus.

In a possible design scheme, the communication apparatus according to the tenth aspect may further include a memory. The memory and the processor may be integrated together, or may be disposed separately. The memory may be configured to store a computer program and/or data related to the method according to either of the first aspect and the sixth aspect.

In embodiments of this application, the communication apparatus according to the tenth aspect may be the terminal or a network apparatus according to either of the first aspect and the sixth aspect, a chip (system) or another part or component that may be disposed in the terminal or the network apparatus, or an apparatus that includes the terminal or the network apparatus.

In addition, for technical effects of the communication apparatus according to the tenth aspect, refer to the technical effects of the method according to any one of the implementations of the first aspect or the sixth aspect. Details are not described herein again.

According to an eleventh aspect, a communication apparatus is provided. The communication apparatus includes a processor. The processor is coupled to a memory, and the processor is configured to execute a computer program stored in the memory, to cause the communication apparatus to perform the method according to any one of the possible implementations of the first aspect or the sixth aspect.

In a possible design scheme, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In embodiments of this application, the communication apparatus according to the eleventh aspect may be the terminal or a network apparatus according to either of the first aspect and the sixth aspect, a chip (system) or another part or component that may be disposed in the terminal or the network apparatus, or an apparatus that includes the terminal or the network apparatus.

In addition, for technical effects of the communication apparatus according to the eleventh aspect, refer to the technical effects of the method according to any one of the implementations of the first aspect or the sixth aspect. Details are not described herein again.

According to a twelfth aspect, a communication apparatus is provided, including a processor and a memory, where the memory is configured to store a computer program; and when the processor executes the computer program, the communication apparatus is caused to perform the method according to any one of the implementations of the first aspect or the sixth aspect.

In a possible design scheme, the communication apparatus according to the twelfth aspect may further include a transceiver. The transceiver may be a transceiver circuit or an interface circuit. The transceiver may be used by the communication apparatus according to the twelfth aspect to communicate with another communication apparatus.

In embodiments of this application, the communication apparatus according to the twelfth aspect may be the terminal or a network apparatus according to either of the first aspect and the sixth aspect, a chip (system) or another part or component that may be disposed in the terminal or the network apparatus, or an apparatus that includes the terminal or the network apparatus.

In addition, for technical effects of the communication apparatus according to the twelfth aspect, refer to the technical effects of the method according to any one of the implementations of the first aspect or the sixth aspect. Details are not described herein again.

According to a thirteenth aspect, a communication chip is provided. The communication chip stores instructions; and when the chip runs on a communication device, the method according to any one of the implementations of the first aspect or the sixth aspect is implemented.

According to a fourteenth aspect, a communication chip is provided. The communication chip includes a logic circuit and a communication interface. The logic circuit is configured to execute computer instructions, and the communication interface is used by the communication chip to communicate with another apparatus or chip. When the logic circuit executes the computer instructions, the method according to any one of the implementations of the first aspect or the sixth aspect is implemented.

According to a fifteenth aspect, a communication system is provided. The communication system includes a first management service provider entity configured to perform the method according to the first aspect and a management service consumer configured to perform the method according to the second aspect.

According to a sixteenth aspect, a communication system is provided. The communication system includes a first management service provider entity configured to perform the method according to the first aspect, a management service consumer configured to perform the method according to the second aspect, and a second management service provider entity configured to perform the method according to the third aspect.

According to a seventeenth aspect, a communication system is provided. The communication system includes a first management service provider entity configured to perform the method according to the fourth aspect and a management service consumer configured to perform the method according to the fifth aspect.

According to an eighteenth aspect, a communication system is provided. The communication system includes a first management service provider entity configured to perform the method according to the fourth aspect, a management service consumer configured to perform the method according to the fifth aspect, and a second management service provider entity configured to perform the method according to the sixth aspect.

According to a nineteenth aspect, a computer-readable storage medium is provided, and includes a computer program or instructions. When the computer program or the instructions are run on a computer, the computer is caused to perform the method according to any one of the possible implementations of the first aspect or the sixth aspect.

According to a twentieth aspect, a computer program product is provided, and includes a computer program or instructions. When the computer program or the instructions are run on a computer, the computer is caused to perform the method according to any one of the possible implementations of the first aspect or the sixth aspect.

### BRIEF DESCRIPTION OF DRAWINGS

FIG. 1 is a diagram of an architecture of a network system according to an embodiment of this application;
FIG. 2 is a diagram of a flight route of an uncrewed aerial vehicle according to an embodiment of this application;
FIG. 3 is a diagram of an architecture of a communication system according to an embodiment of this application;
FIG. 4 is a schematic flowchart 1 of a communication method according to an embodiment of this application;
FIG. 5 is a diagram 1 of dividing a first region into a plurality of first grids according to an embodiment of this application;
FIG. 6 is a diagram 2 of dividing a first region into a plurality of first grids according to an embodiment of this application;
FIG. 7 is a diagram 3 of dividing a first region into a plurality of first grids according to an embodiment of this application;
FIG. 8 is a diagram of a first service assurance satisfaction degree according to an embodiment of this application;
FIG. 9 is a diagram 1 of determining a moving policy based on a plurality of first grids according to an embodiment of this application;
FIG. 10 is a diagram 2 of determining a moving policy based on a plurality of first grids according to an embodiment of this application;
FIG. 11 is a schematic flowchart 2 of a communication method according to an embodiment of this application;
FIG. 12 is a schematic flowchart 3 of a communication method according to an embodiment of this application;
FIG. 13 is a schematic flowchart 4 of a communication method according to an embodiment of this application;
FIG. 14 is a schematic flowchart 5 of a communication method according to an embodiment of this application;
FIG. 15 is a schematic flowchart 6 of a communication method according to an embodiment of this application;
FIG. 16 is a diagram of determining a route based on a plurality of grids according to an embodiment of this application;
FIG. 17 is a diagram of determining a route based on a plurality of first grids according to an embodiment of this application;
FIG. 18 is a schematic flowchart 7 of a communication method according to an embodiment of this application;
FIG. 19 is a schematic flowchart 8 of a communication method according to an embodiment of this application;
FIG. 20 is a diagram 1 of a structure of a communication apparatus according to an embodiment of this application; and
FIG. 21 is a diagram 2 of a structure of a communication apparatus according to an embodiment of this application.

### DESCRIPTION OF EMBODIMENTS

For ease of understanding, technical terms in embodiments of this application are first described below.

### 1. Network system

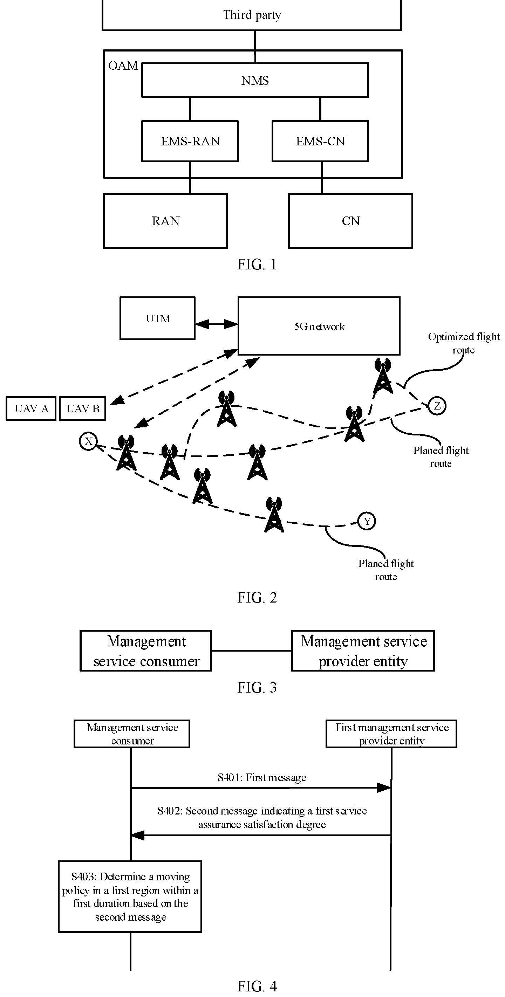

FIG. 1 is a diagram of an architecture of a network system. As shown in FIG. 1, the architecture of the network system includes a third party, an operations, administration and maintenance (operations, administration and maintenance, OAM), a radio access network (radio access network, RAN) network element, and a core network (core network, CN) network element.

The third party may also be referred to as a third-party management controller or a third-party management system, and may be configured to manage and control a terminal. For example, the third party may be an unmanned aircraft system traffic management (unmanned aircraft system traffic management, UTM), an unmanned aerial vehicle (unmanned aerial vehicle, UAV) operator, or an uncrewed aerial system (uncrewed aerial system, UAS).

The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal device, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a function of the terminal, or the like. The terminal device in this application may alternatively be a vehicle-mounted module, a vehicle-mounted assembly, a vehicle-mounted component, a vehicle-mounted chip, or a vehicle-mounted unit that is built as one or more components or units in a vehicle. The terminal device may alternatively be another device having a function of the terminal device. For example, the terminal device may alternatively be a device that functions as the terminal device in D2D communication.

A form of the terminal device is not limited in embodiments of this application. An apparatus for implementing the function of the terminal device may be a terminal device, or may be an apparatus, for example, a chip system, that can support the terminal device to implement the function. The apparatus may be mounted in the terminal device or used in collaboration with the terminal device. In embodiments of this application, the chip system may include a chip, or may include a chip and another discrete component.

For example, when an uncrewed aerial vehicle uses a 3rd generation partnership project (3rd generation partnership project, 3GPP) network as an access type, the UTM (or the UAV operator or the UAS) may need to determine a network status by relying on the 3GPP network, to perform flight path scheduling. A 5G system may assist the UTM or the UAV operator in providing an alternative flight path or reconfiguring a network resource based on quality of service (quality of service, QoS) supported in a specific region, to achieve the needed QoS.

For example, as shown in FIG. 2, a company #1 plans to use an uncrewed aerial vehicle A to perform video detection on a pipeline from X to Y, and a company #2 uses an uncrewed aerial vehicle B for express delivery from X to Z. The uncrewed aerial vehicle A and the uncrewed aerial vehicle B are registered with a 5G network, and may communicate with the UTM via the 5G network. The UTM obtains planned flight route information, such as the start point X, the end point Y, and needed QoS, of the uncrewed aerial vehicle A. The UTM and the 5G system determine QoS information, such as end-to-end latency and quality of experience (quality of experience, QoE), needed by an uncrewed aerial vehicle service along a flight route. Based on available analysis information, the 5G system may ensure that quality of service on a flight path of the uncrewed aerial vehicle A meets a requirement, may reconfigure a network resource to provide the needed QoS for the uncrewed aerial vehicle A along a flight path, or may replan a route for the uncrewed aerial vehicle A to achieve better service assurance. The UTM (or the UAS) may determine a final flight route based on information fed back by the 5G network, and notify the uncrewed aerial vehicle A of the final flight route. The uncrewed aerial vehicle A receives flight path information from the UTM (or the UAS) via the 5G system, and starts a flight mission.

The OAM is configured to complete routine analysis, prediction, planning, and configuration work on a network and a service, and perform routine operation activities such as testing and fault management on the network and the service of the network. The OAM includes a network management system (network management system, NMS), a single-domain management system (domain management system, EMS)-RAN, and an EMS-CN. The NMS may also be referred to as a cross-domain management system (cross-domain management system), and may manage a plurality of single-domain management systems. An EMS may manage a single-domain network element, for example, the RAN network element and the CN network element.

The RAN may be a device that provides access for the terminal device. For example, the RAN device may include an access network device, for example, a 6G base station, in a next generation mobile communication system like 6G. Alternatively, in a next generation mobile communication system, the network device may be named in another manner that falls within the protection scope of embodiments of this application. This is not limited in this application. Alternatively, the RAN device may include a gNB in 5G, for example, a new radio (new radio, NR) system, or one antenna panel or a group of antenna panels (including a plurality of antenna panels) of a base station in 5G, or may be a network node, for example, a baseband unit (baseband unit, BBU), a central unit (central unit, CU), a distributed unit (distributed unit, DU), or an RSU having a function of a base station, that is included in a gNB, a transmission point (transmission reception point, TRP, or transmission point, TP), or a transmission measurement function (transmission measurement function, TMF), a wired access gateway, or a 5G core network. Alternatively, the RAN device may include an access point (access point, AP), a wireless relay node, a wireless backhaul node, macro base stations in various forms, a micro base station (also referred to as a small cell), a relay station, an access point, a wearable device, a vehicle-mounted device, or the like in a wireless fidelity (wireless fidelity, Wi-Fi) system.

The CN is mainly responsible for maintaining subscription data of a mobile network, and providing session management, mobility management, policy management, security authentication, and the like for the terminal device. The CN mainly includes a user plane function (user plane function, UPF), an authentication server function (authentication server function, AUSF), an access and mobility management function (access and mobility management function, AMF), a session management function (session management function, SMF), a network slice selection function (network slice selection function, NSSF), a network exposure function (network exposure function, NEF), a network repository function (network repository function, NRF), a policy control function (policy control function, PCF), a unified data management (unified data management, UDM), a unified data repository (unified data repository, UDR), an application function (application function, AF), and a sensing function (sensing function, SF).

Currently, to ensure network quality experienced by a terminal in a movement process, a moving route is usually matched with coverage areas of base stations after the moving route is provided for the terminal, to determine base stations whose service ranges can cover the moving route; and configurations of the base stations, for example, tilt angles of the base stations, are adjusted, to ensure network quality experienced by the terminal during movement along the moving route.

However, adjusting a configuration of a base station causes more network resources to be concentrated, when the terminal moves, on a region in which the terminal is located. In this case, network resources in another region (namely, a region other than the region in which the terminal is located) are reduced, to be specific, network quality experienced by a terminal in the another region cannot be ensured. Therefore, how to ensure, without affecting network quality in another region, the network quality experienced by the terminal during the movement is a hot topic currently discussed.

For the foregoing technical problem, embodiments of this application provide the following technical solutions, to ensure, without affecting network quality in each region, the network quality experienced by the terminal during the movement.

The following describes the technical solutions in this application with reference to the accompanying drawings.

The technical solutions in embodiments of this application may be applied to various communication systems, for example, 4th generation (4th generation, 4G) mobile communication systems such as a long term evolution (long term evolution, LTE) system, 5th generation (5th generation, 5G) mobile communication systems such as a new radio (new radio, NR) system, and communication systems evolved after 5G, such as a 6th generation (6th generation, 6G) mobile communication system, or may be applied to a wireless fidelity (wireless fidelity, Wi-Fi) system, a vehicle to everything (vehicle to everything, V2X) communication system, a device-to-device (device-to-device, D2D) communication system, an Internet of vehicles communication system, and the like.

All aspects, embodiments, or features are presented in this application by describing a system that may include a plurality of devices, components, modules, or the like. It should be appreciated and understood that, each system may include another device, component, module, or the like, and/or may not include all devices, components, modules, or the like discussed with reference to the accompanying drawings. In addition, a combination of these solutions may be used.

In addition, in embodiments of this application, terms such as "for example" and "such as" represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "corresponding, relevant (corresponding, relevant)", and "corresponding (corresponding)" may sometimes be interchangeably used. It should be noted that meanings expressed by the terms are consistent when differences of the terms are not emphasized. In addition, "/" in this application may indicate an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to similar technical problems.

For ease of understanding embodiments of this application, a communication system shown in FIG. 3 is first used as an example to describe in detail a communication system usable in embodiments of this application. For example, FIG. 3 is a diagram of an architecture of a communication system usable in communication methods according to embodiments of this application.

The communication system includes a management service consumer and a first management service provider entity. The management service consumer is an invoker of a management service, and may request to invoke a management service provided by a management service provider entity. The first management service provider entity may be responsible for providing a management service, and receiving a request from the management service consumer. The communication system may be used in the foregoing architecture of the management system. In this case, the management service consumer may be the third-party management system, and the management service provider entity may be deployed on the EMS-RAN and the EMS-CN, or deployed on the NMS.

Optionally, the communication system may further include a second management service provider entity. The second management service provider entity may provide a management service, for example, simulating a region by establishing a network twin model, and previewing a management policy on the network twin model, to evaluate service assurance satisfaction degrees in the region under different management policies. A simulated object may include a regional environment, for example, a block structure, weather, or a building, a regional network, a communication device that provides a network for the region, and the like. In this case, the management service consumer may be the third-party management system, and the second management service provider entity may be deployed on the NMS, the EMS-RAN, and the EMS-CN.

It may be understood that, as shown in FIG. 3, when the communication system includes the management service consumer and the first management service provider entity, the first management service provider entity may be the management service provider entity in FIG. 3. When the communication system includes the management service consumer, the first management service provider entity, and the second management service provider entity, the management service consumer and the first management service provider entity may respectively correspond to the management service consumer and the management service provider entity in FIG. 3; and the first management service provider entity and the second management service provider entity may also respectively correspond to the management service consumer and the management service provider entity in FIG. 3, in other words, the first management service provider entity is a management service consumer of the second management service provider entity.

It may be further understood that the "management service consumer" in embodiments of this application is merely a description example, and the "management service consumer" may alternatively be replaced with any possible description, for example, the "third party" or the "third-party management system". This is not limited. The "management service provider entity" in embodiments of this application is merely a description example, and the "management service provider entity" may alternatively be replaced with any possible description, for example, a "service assurance service provider" or a "management service provider". This is not limited.

In the communication system, the management service consumer may obtain a first service assurance satisfaction degree from the first management service provider entity. The first service assurance satisfaction degree may represent a degree of matching between network performance in a first region within first duration and a network performance requirement. In other words, the first service assurance satisfaction degree may reflect network quality in the first region within the first duration. After obtaining the first service assurance satisfaction degree, the management service consumer may determine a moving policy from a region with good network quality in the first region based on the first service assurance satisfaction degree. In this way, network quality experienced by a terminal when the terminal moves within the first duration based on the moving policy can be ensured without affecting network quality in each region.

It may be understood that FIG. 3 is a simplified diagram used as an example for ease of understanding. The communication system may further include another network device and/or another terminal device that are/is not shown in FIG. 3.

For ease of understanding, the following specifically describes, with reference to FIG. 4, the communication method provided in embodiments of this application.

For example, FIG. 4 is a schematic flowchart 1 of a communication method according to an embodiment of this application. The method may be applied to communication between the management service consumer and the first management service provider entity in the foregoing communication system.

As shown in FIG. 4, a procedure for the communication method is as follows:
S401: The management service consumer sends a first message to the first management service provider entity. Correspondingly, the first management service provider entity receives the first message from the management service consumer.

The first message is for requesting to evaluate a service assurance satisfaction degree in a first region within first duration.

The first region is a region in which a terminal is predicted to move. For example, if the terminal is predicted to move in a region #A, for example, move from a right side to a left side of the region #A, the region #A is the first region. Alternatively, the first region is a region that covers a start point from which and an end point to which the terminal is predicted to move. For example, if the terminal is predicted to move from a start point #a to an end point #b, a region that covers the start point #a and the end point #b is the first region. A size of the region that covers the start point from which and the end point to which the terminal is predicted to move may be set based on an actual situation. This is not limited. It may be understood that the terminal in this embodiment of this application is a terminal that may be managed by the management service consumer.

The first duration is duration for evaluating the service assurance satisfaction degree in the first region, and may be duration for which the terminal is predicted to move, or may include the duration for which the terminal is predicted to move. For example, if the duration for which the terminal is predicted to move is 9:00 to 10:00, the first duration may be 9:00 to 10:00, 8:00 to 10:00, or 8:30 to 10:00. It may be understood that the first duration may be flexibly set based on an actual situation. This is not limited.

The service assurance satisfaction degree represents a degree of matching between network performance and a network performance requirement. The network performance may be a throughput, latency, or the like, and the network performance is measured or estimated network performance, for example, measured network performance in a specific region. The network performance requirement is a requirement, for example, a throughput requirement or a latency requirement, of the management service consumer on network performance of a communication service performed when the terminal moves. For example, if the network performance requirement is that the throughput reaches 50 megabits per second (Mbit/s), and the network performance is 40 Mbit/s, the service assurance satisfaction degree is 80%. It may be understood that the service assurance satisfaction degree in the first region within the first duration is a degree of matching between network performance in the first region within the first duration and the network performance requirement, and the network performance in the first region within the first duration is estimated network performance. It may be understood that the "service assurance satisfaction degree" in embodiments of this application is merely a description example, and the "service assurance satisfaction degree" may alternatively be replaced with any possible description, for example, a "service satisfaction degree" or an "assurance satisfaction degree". This is not limited.

Optionally, the first message may include at least one of the following: information indicating the first region or information indicating the first duration.

The information indicating the first region may be location information of the first region. For example, the first region is the region #A, and the information indicating the first region may be location information of the region #A, for example, a plurality of coordinate points included in the region #A. Alternatively, the information indicating the first region may be information about the start point from which the terminal is expected to move and information about the end point to which the terminal is expected to move, where the information about the start point and the information about the end point may be represented by longitudes and latitudes corresponding to the two pieces of information.

The information indicating the first duration may include a start time point and an end time point. For example, if the duration for evaluating the service assurance satisfaction degree in the first region is 14:00 to 15:00, the information indicating the first duration includes the start time point 14:00 and the end time point 15:00. Alternatively, the information indicating the first duration may include a start time point and an evaluation time period. Still using the example, in this case, the information indicating the first duration includes the start time point 14:00 and an evaluation time period being 1 hour (h).

The management service consumer may flexibly determine the first region and the first duration based on an actual status of the terminal, for example, determine the first duration based on the duration for which the terminal is predicted to move, and/or determine the first region based on information such as the region in which, the start point from which, and the end point to which the terminal is predicted to move; and send the first message carrying the information indicating the first duration and/or the information indicating the first region to the first management service provider entity, to obtain the service assurance satisfaction degree in the first region within the first duration based on the first duration and/or the first region.

It may be understood that when the first region or the first duration is preset in the first management service provider entity, the first message may not include the information indicating the first region or the information indicating the first duration. In other words, if the first message does not include the information indicating the first region or the information indicating the first duration, it may indicate that the information indicating the first region or the information indicating the first duration has been preset in the first management service provider entity.

Optionally, the first message may include at least one of the following: an evaluation mode, an evaluation granularity requirement, or the network performance requirement.

The evaluation mode indicates to divide a region into a plurality of grids, and reflect a service assurance satisfaction degree in the region at a grid granularity. In other words, when the first message includes the evaluation mode, it may indicate that the management service consumer requests to evaluate respective service assurance satisfaction degrees within the first duration in a plurality of first grids included in the first region. This helps the management service consumer determine, after obtaining the respective service assurance satisfaction degrees in the plurality of first grids within the first duration, a moving policy based on the service assurance satisfaction degrees corresponding to the first grids.

The evaluation granularity requirement indicates a size of a plurality of grids included in a region. For example, when the region is a plane region, the evaluation granularity requirement may be a length and a width of or an area of the plurality of grids. For example, an evaluation granularity is a length of 1 meter (m) and a width of 1 m. Alternatively, an evaluation granularity is 1 square meter (m²). When the region is a three-dimensional region or three-dimensional space, the evaluation granularity requirement may be a length, a width, and a height of or a volume of the plurality of grids. For example, an evaluation granularity is a length of 1 meter (m), a width of 1 m, and a height of 1 m. Alternatively, an evaluation granularity is 1 cubic meter (m³). It may be understood that, when the first message includes the information indicating the first region and the evaluation granularity requirement, the evaluation granularity requirement may indicate a size of the plurality of first grids obtained by dividing the first region.

For the network performance requirement, refer to the foregoing related descriptions. Details are not described herein again.

It may be understood that, when the first message includes the evaluation mode, it may indicate that the first message is for requesting to evaluate the respective service assurance satisfaction degrees within the first duration in the plurality of first grids included in the first region. When the first message includes the evaluation granularity requirement, it may indicate to divide the first region into the plurality of first grids based on the evaluation granularity. For example, if the evaluation granularity is the length of 1 m and the width of 1 m, it indicates to divide the first region into a plurality of first grids whose lengths and widths are both 1 m. When the first message includes the network performance requirement, it may indicate to determine the service assurance satisfaction degrees in the plurality of first grids within the first duration based on the network performance requirement. In addition, when the evaluation mode, the evaluation granularity requirement, or the network performance requirement is preset in the first management service provider entity, the first message may not include the evaluation mode, the evaluation granularity requirement, or the network performance requirement.

Optionally, the first message may include at least one of the following: a continuous-evaluation indication, a first time interval, a second time interval, a reporting event, or a moving speed.

The continuous-evaluation indication may indicate that time extension needs to be considered when a service assurance satisfaction degree in a region is evaluated, to be specific, time periods that correspond to a plurality of grids included in the region and that are for evaluating service assurance satisfaction degrees are at least partially different. In other words, when the message includes the continuous-evaluation indication, it indicates that the time extension needs to be considered; or when the message does not include the continuous-evaluation indication, it indicates that the time extension does not need to be considered.

Alternatively, the continuous-evaluation indication may indicate whether time extension needs to be considered when a service assurance satisfaction degree in a region is evaluated, to be specific, whether time periods that correspond to a plurality of grids included in the region and that are for evaluating service assurance satisfaction degrees are at least partially different. When the time extension is not considered, the continuous-evaluation indication indicates that the time periods that correspond to the plurality of grids included in the region and that are for evaluating the service assurance satisfaction degrees are the same. In other words, in this case, if the first message includes the continuous-evaluation indication, the continuous-evaluation indication indicates that time periods that correspond to the plurality of first grids and that are for evaluating the service assurance satisfaction degrees are the same, that is, the time period is the first duration. When the time extension is considered, the continuous-evaluation indication indicates that the time periods that correspond to the plurality of grids included in the region and that are for evaluating the service assurance satisfaction degrees are at least partially different. In other words, in this case, if the first message includes the continuous-evaluation indication, the continuous-evaluation indication indicates that time periods that correspond to the plurality of first grids and that are for evaluating the service assurance satisfaction degrees are at least partially different, different time periods are all within the first duration, and the different time periods form the first duration.

It may be understood that different bits may indicate different cases of the continuous-evaluation indication. For example, a bit 0 indicates that the time extension needs to be considered, and a bit 1 indicates that the time extension does not need to be considered. To be specific, when a parameter value of an information element that is in the first message and that indicates the continuous-evaluation indication is 0, it may indicate that the time periods for the service assurance satisfaction degree evaluation in the plurality of grids that is requested by using the first message are at least partially different. When a parameter value of an information element that is in the first message and that indicates the continuous-evaluation indication is 1, it may indicate that the time periods for the service assurance satisfaction degree evaluation in the plurality of grids that is requested by using the first message are all the same.

The first time interval indicates a difference between time periods for evaluating service satisfaction degrees in two grids, and the two grids are two neighboring grids that are in a plurality of grids included in a region and in which service satisfaction degrees are evaluated within different time periods.

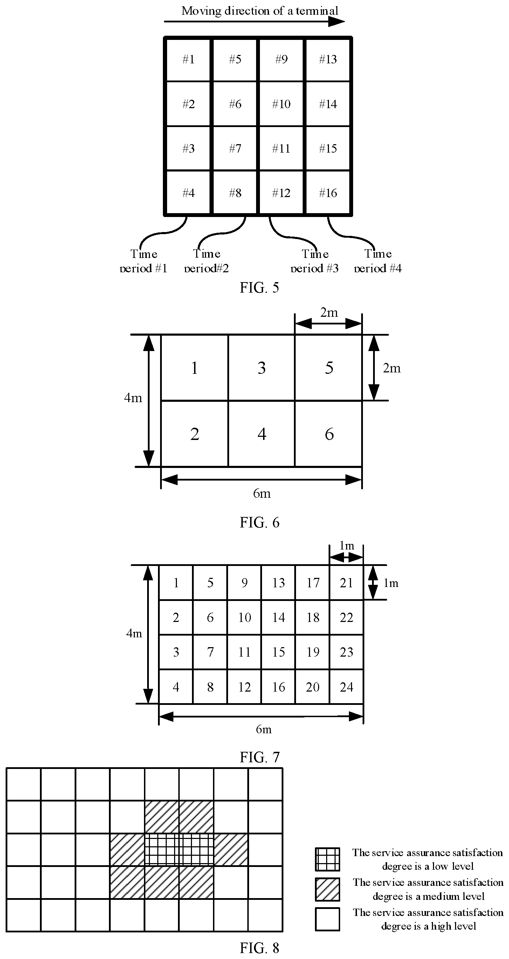

For example, as shown in FIG. 5, the terminal moves from the left side to the right side of the first region. In this case, time periods for evaluating service satisfaction degrees in a first grid #1 to a first grid #4 are all a time period #1, time periods for evaluating service satisfaction degrees in a first grid #5 to a first grid #8 are all a time period #2, time periods for evaluating service satisfaction degrees in a first grid #9 to a first grid #12 are all a time period #3, time periods for evaluating service satisfaction degrees in a first grid #13 to a first grid #16 are all a time period #4, and the time period #1, the time period #2, the time period #3, and the time period #4 are different. The foregoing two grids may be the first grid #1 and the first grid #5. In this case, the difference between the time periods is a difference between the time period #1 and the time period #2. Alternatively, the foregoing two grids may be the first grid #11 and the first grid #15. In this case, the difference between the time periods is a difference between the time period #3 and the time period #4. It may be understood that the difference between the time period #2 and the time period #1, a difference between the time period #3 and the time period #2, and the difference between the time period #4 and the time period #3 are all the same.

It can be learned that when the first message includes the first time interval, the time periods for evaluating the service assurance satisfaction degrees in the plurality of first grids may be determined based on the first time interval and the first duration.

The second time interval is a time difference between every two consecutive times of reporting a service assurance satisfaction degree in a region when the service assurance satisfaction degree in the region is periodically reported. For example, if a time point at which the service assurance satisfaction degree in the region is reported for the 1^{st} time is 14:00, and a time point at which the service assurance satisfaction in the region is reported for the 2^{nd} time is 15:00, the second time interval is 1 h. It may be understood that, if the first message includes the second time interval, it may indicate that the service assurance satisfaction degree in the first region within the first duration needs to be periodically reported, and a time difference between every two consecutive times of reporting the service assurance satisfaction degree in the first region within the first duration is the second time interval. It may be understood that the second time interval may alternatively be replaced with a reporting frequency. For example, the service assurance satisfaction in the region is reported once every 2 h.

The reporting event indicates that reporting of a service assurance satisfaction degree in a region is triggered based on a preset event that occurs in a process of evaluating the service assurance satisfaction degree in the region. In other words, the reporting event may be reporting triggered by an event (event), for example, reporting performed for the 1^{st} time after a request for obtaining the service assurance satisfaction degree in the region is sent or reporting triggered when a service assurance satisfaction degree corresponding to a specific grid in a plurality of grids included in the region changes (for example, the satisfaction degree changes from high to low).

The moving speed indicates a moving speed in a region. In other words, the moving speed may indicate a speed at which the terminal moves in the region. It may be understood that a plurality of grids included in the region may be divided into groups based on the moving speed and a moving direction of the terminal, to determine a time period for evaluating a service assurance satisfaction degree in each group of grids. For example, as shown in FIG. 5, the terminal moves from the left side to the right side of the first region at a uniform speed, and the first duration is 11:00 to 15:00. In this case, it may be determined, based on the moving speed and the moving direction of the terminal, that the time period #1 is 11:00 to 12:00, the time period #2 is 12:00 to 13:00, the time period #3 is 13:00 to 14:00, and the time period #4 is 14:00 to 15:00.

It may be understood that the management service consumer may choose, based on an actual situation, whether to include the continuous-evaluation indication, the first time interval, the second time interval, the reporting event, or the moving speed in the first message, and may set the first time interval, the second time interval, and the reporting event based on a specific situation, so that an obtained first service assurance satisfaction degree is more practical, and a moving policy that can better ensure network quality experienced by the terminal during the movement is determined.

It may be further understood that the foregoing describes a plurality of different types of information that may be included in the first message, and the first message includes different information when being for requesting different content. The following cases are separately described.

Case 1.1: The time extension is not considered when the respective service assurance satisfaction degrees in the plurality of first grids are requested, to be specific, the time periods that correspond to the plurality of first grids and that are for evaluating the service assurance satisfaction degrees are the same.

In this case, the first message may be specifically for requesting to evaluate the respective service assurance satisfaction degrees in the plurality of first grids within the first duration. In addition, the first message may include at least one of the following: the information indicating the first region, the information indicating the first duration, the evaluation mode, the evaluation granularity requirement, the network performance requirement, the continuous-evaluation indication, the second time interval, or the reporting event. For details about each piece of information, refer to the foregoing related descriptions, and the details are not described herein again.

It may be understood that, after the first management service provider entity receives the first message, if the time extension is not considered by default when the respective service assurance satisfaction degrees in the plurality of first grids are requested, the first message may not include the continuous-evaluation indication.

Case 1.2: The time extension is considered when the respective service assurance satisfaction degrees in the plurality of first grids are requested, to be specific, the time periods that correspond to the plurality of first grids and that are for evaluating the service assurance satisfaction degrees are at least partially different.

In this case, the first message may be specifically for requesting to evaluate the respective service assurance satisfaction degrees in the plurality of first grids, the time periods for evaluating the service assurance satisfaction degrees in the plurality of first grids are at least partially different, the time periods are within the first duration, and the first region includes the plurality of first grids. In addition, the first message may include at least one of the following: the information indicating the first region, the information indicating the first duration, the evaluation mode, the evaluation granularity requirement, the network performance requirement, the continuous-evaluation indication, the first time interval, the second time interval, the reporting event, or the moving speed. For details about each piece of information, refer to the foregoing related descriptions, and the details are not described herein again.

It may be understood that, after the first management service provider entity receives the first message, if the time extension is considered by default when the respective service assurance satisfaction degrees in the plurality of first grids are requested, the first message may not include the continuous-evaluation indication.

S402: The first management service provider entity sends, to the management service consumer based on the first message, a second message indicating the first service assurance satisfaction degree. Correspondingly, the management service consumer receives, from the first management service provider entity, the second message indicating the first service assurance satisfaction degree.

The first service assurance satisfaction degree represents the degree of matching between the network performance in the first region within the first duration and the network performance requirement, in other words, the first service assurance satisfaction degree is an obtained service assurance satisfaction degree in the first region within the first duration.

It may be understood that, when the first message is for requesting to evaluate the service assurance satisfaction degrees corresponding to the plurality of first grids included in the first region, the first service assurance satisfaction degree may include the service assurance satisfaction degrees corresponding to the plurality of first grids, and the service assurance satisfaction degrees corresponding to the plurality of first grids may be the same or different. In this case, the second message may include a service assurance satisfaction degree in each first grid in the plurality of first grids included in the first region. For example, the first region may be divided into 24 first grids. In this case, the first service assurance satisfaction degree includes 24 service assurance satisfaction degrees #1, and the 24 service assurance satisfaction degrees may be the same or different. Correspondingly, the second message may include the 24 service assurance satisfaction degrees #1.

Optionally, the second message may include at least one of the following: respective identifiers of the plurality of first grids, the respective service assurance satisfaction degrees in the plurality of first grids, respective locations of the plurality of first grids, or time information.

The time information indicates a time period for evaluating the service assurance satisfaction degree in each first grid in the plurality of first grids, in other words, the time information includes a plurality of time periods for respectively evaluating the service assurance satisfaction degrees in the plurality of first grids.

For example, the first region is divided into four first grids, and identifiers of the four first grids are respectively a first grid #a, a first grid #b, a first grid #c, and a first grid #d. After obtaining service assurance satisfaction degrees respectively corresponding to the first grid #a to the first grid #d, the first management service provider entity may send the first grid #a to the first grid #d, the respective service assurance satisfaction degrees in the first grid #a to the first grid #d, and respective locations of the first grid #a to the first grid #d to the management service consumer, to help the management service consumer determine the moving policy for the terminal based on these pieces of information. The first grid #a, the service assurance satisfaction degree in the first grid #a, and the location of the first grid #a correspond to each other, and the correspondence needs to be sent to the management service consumer. For example, the three pieces of information are set in a same tuple to represent the correspondence among the three pieces of information. Other information is processed in a similar way, and details are not described herein.

For another example, still using the foregoing example, a time period for evaluating the service assurance satisfaction degree in the first grid #a is a time period #a, a time period for evaluating the service assurance satisfaction degree in the first grid #b is a time period #b, a time period for evaluating the service assurance satisfaction degree in the first grid #c is a time period #c, and a time period for evaluating the service assurance satisfaction degree in the first grid #d is a time period #d. In this case, the first grid #a to the first grid #d, the respective service assurance satisfaction degrees in the first grid #a to the first grid #d, the respective locations of the first grid #a to the first grid #d, and the time period #a to the time period #d may be sent to the management service consumer, to help the management service consumer determine the moving policy for the terminal based on these pieces of information. The first grid #a, the service assurance satisfaction degree in the first grid #a, the location of the first grid #a, and the time period #a correspond to each other, and the correspondence needs to be sent to the management service consumer. For example, the four pieces of information are set in a same tuple to represent the correspondence among the four pieces of information. Other information is processed in a similar way, and details are not described herein.

It may be understood that in this embodiment of this application, there is a correspondence among the respective identifiers of the plurality of first grids, the respective service assurance satisfaction degrees in the plurality of first grids, the respective locations of the plurality of first grids, and the time periods that respectively correspond to the plurality of first grids and that are for evaluating the service assurance satisfaction degrees. In addition, in this embodiment of this application, "respective ... of the plurality of first grids" means "... of each first grid in the plurality of first grids".

In addition, in the foregoing case 1.1, because the time periods for evaluating the service assurance satisfaction degrees in the plurality of first grids are the same, in other words, are all the first duration, the second message may not include the time information in the case 1.1. In this way, communication overheads can be reduced. In the foregoing case 1.2, because the time periods for evaluating the service assurance satisfaction degrees in the plurality of first grids are at least partially different, the second message may include the time information in the case 1.2, to help the management service consumer determine the moving policy for the terminal based on the time information.

It may be further understood that there are a plurality of manners of obtaining the first service assurance satisfaction degree. For example, the first service assurance satisfaction degree may be obtained by the first management service provider entity from another entity (for example, the second management service provider entity), or may be autonomously generated by the first management service provider entity. The following cases are separately described.

Case 2.1: The first management service provider entity obtains the first service assurance satisfaction degree from the second management service provider entity.

In this case, that the first management service provider entity sends, to the management service consumer based on the first message, the second message indicating the first service assurance satisfaction degree may specifically include: The first management service provider entity obtains the first service assurance satisfaction degree from the second management service provider entity based on the first message, and sends the second message to the management service consumer based on the first service assurance satisfaction degree. In other words, the first management service provider entity may obtain the first service assurance satisfaction degree from the second management service provider entity, and the first management service provider entity does not need to generate the first service assurance satisfaction degree based on the first message.

Optionally, that the first management service provider entity obtains the first service assurance satisfaction degree from the second management service provider entity based on the first message may specifically include: The first management service provider entity sends a third message to the second management service provider entity based on the first message, where the third message is for requesting to evaluate the service assurance satisfaction degree in the first region within the first duration. Correspondingly, the second management service provider entity receives the third message from the first management service provider entity. The second management service provider entity sends a fourth message to the first management service provider entity based on the third message, where the fourth message indicates the first service assurance satisfaction degree. Correspondingly, the first management service provider entity receives the fourth message from the second management service provider entity.

The third message may be specifically for requesting to evaluate the service assurance satisfaction degrees within the first duration in the plurality of first grids included in the first region. Alternatively, the third message may be specifically for requesting to evaluate the respective service assurance satisfaction degrees in the plurality of first grids included in the first region, where the time periods for evaluating the service assurance satisfaction degrees in the plurality of first grids are at least partially different, and the time periods are within the first duration. This is described below.

The fourth message includes the service assurance satisfaction degree in each first grid in the plurality of first grids included in the first region. For example, the fourth information includes at least one of the following: the respective identifiers of the plurality of first grids, the respective service assurance satisfaction degrees in the plurality of first grids, the respective locations of the plurality of first grids, or the time information. For details, refer to the foregoing related descriptions, and the details are not described herein again.

It may be understood that, if the first management service provider entity can obtain a correspondence between the respective identifiers of the plurality of first grids and the respective locations of the plurality of first grids, the fourth message may not include the respective locations of the plurality of first grids, in other words, the first management service provider entity may determine the respective locations of the plurality of first grids based on the correspondence after receiving the respective identifiers of the plurality of first grids. In this way, the communication overheads can be reduced.

In addition, for the foregoing case 1.1, because the time periods for evaluating the service assurance satisfaction degrees in the plurality of first grids are the same in the case 1.1, in other words, are all the first duration, the fourth message may not include the time information. In this way, the communication overheads can be reduced. For the foregoing case 1.2, because the time periods for evaluating the service assurance satisfaction degrees in the plurality of first grids are at least partially different in the case 1.2, the fourth message may include the time information, to help the management service consumer determine the moving policy for the terminal based on the time information.

The following describes a plurality of different types of information that may be included in the third message.

In a first possible implementation, the third message may include at least one of the following: the information indicating the first duration, region information, or information indicating at least one network element.

For the information indicating the first duration, refer to the related descriptions of "S401" above. Details are not described herein again.

The region information indicates the plurality of first grids obtained by dividing the first region, and the region information may include at least one of the following: the respective identifiers of the plurality of first grids, a size of the plurality of first grids, or the respective locations of the plurality of first grids. In other words, the plurality of first grids may be clearly indicated by the respective identifiers of the plurality of first grids, the size of the plurality of first grids, and the respective locations of the plurality of first grids. The region information may be obtained by the first management service provider entity by dividing the first region, or may be obtained by the first management service provider entity from another place. This is not limited. When the region information is obtained by the first management service provider entity by dividing the first region, the first management service provider entity may divide the first region based on the first region and the evaluation granularity requirement, to obtain the plurality of first grids.

For example, as shown in FIG. 6, the first region is a region with a length of 6 m and a width of 4 m, the evaluation granularity requirement is that a length of a plurality of grids is 2 m and a width of the plurality of grids is 2 m, and the first management service provider entity may divide the first region into six first grids based on the first region and the evaluation granularity requirement. In this case, the identifiers of the plurality of first grids obtained through division are 1 to 6, the size of the plurality of first grids is the length of 2 m and the width of 2 m, and the locations of the plurality of first grids may be represented by coordinates of respective central points of the plurality of first grids. Alternatively, as shown in FIG. 7, the first region is a region with a length of 6 m and a width of 4 m, the evaluation granularity requirement is that a length of a plurality of grids is 1 m and a width of the plurality of grids is 1 m, and the first management service provider entity may divide the first region into 24 first grids based on the first region and the evaluation granularity requirement. In this case, the identifiers of the plurality of first grids obtained through division are 1 to 24, the size of the plurality of first grids is the length of 1 m and the width of 1 m, and the locations of the plurality of first grids may be represented by coordinates of respective central points of the plurality of first grids.

It can be learned that a granularity of dividing the first region varies with the evaluation granularity requirement. To be specific, a higher evaluation granularity requirement indicates a higher granularity of dividing the first region, and a lower evaluation granularity requirement indicates a lower granularity of dividing the first region. It may be understood that a higher granularity of dividing the first region indicates a more accurate moving policy determined by the management service consumer based on the service assurance satisfaction degrees corresponding to the plurality of first grids, and indicates higher overheads for obtaining, by the second management service provider entity, the service assurance satisfaction degrees corresponding to the plurality of first grids. In addition, a specific value of the evaluation granularity requirement may be determined based on an actual situation. Details are not described herein.

A service range of the at least one network element includes the first region, in other words, the service range of the at least one network element may cover the first region. The at least one network element may be determined by the first management service provider entity based on the first region or the plurality of grids included in the first region. For example, the first management service provider entity may determine, based on the first region, network elements configured to provide network services in the first region, and then determine, based on the network elements, the at least one network element whose service range can cover the first region. For example, the first management service provider entity determines, based on the first region, a network element #1 to a network element #6 in the first region that are configured to provide network services, and then determines, based on the network element #1 to the network element #6, the network element #2 to the network element #5 that can cover the first region. In this case, the at least one network element is the network element #2 to the network element #5. The information indicating the at least one network element may be specific information of the at least one network element, for example, a location and a name of the network element. This is not limited.

It may be understood that, after receiving the first message, the first management service provider entity may obtain, based on the first message, the information indicating the first duration, the region information, and the information indicating the at least one network element, and send the information indicating the first duration, the region information, and the information indicating the at least one network element to the second management service provider entity by using the third message, so that the second management service provider entity obtains the first service assurance satisfaction degree based on the third message.

Further, that the first management service provider entity sends the third message to the second management service provider entity based on the first message may specifically include: The first management service provider entity obtains, based on the first message, at least one of the following information: the region information or the information indicating the at least one network element. The first management service provider entity sends the third message to the second management service provider entity based on the first message and the at least one of the following information. In other words, the first management service provider entity may obtain, based on the first region, the region information and/or the information indicating the at least one network element, and send the region information and/or the information indicating the at least one network element to the second management service provider entity.

Optionally, the third message may include at least one of the following: the evaluation mode or the network performance requirement. For details, refer to the related descriptions of "S401" above, and the details are not described herein again. It may be understood that when the network performance requirement is preset in the second management service provider entity, the third message may not include the network performance requirement. In addition, when the first service assurance satisfaction degree is requested from the second management service provider entity, the second management service provider entity obtains the first service assurance satisfaction degree by default based on the plurality of first grids included in the first region. In this case, the third message may not include the evaluation mode.

Optionally, the third message may include at least one of the following: the continuous-evaluation indication, the first time interval, the second time interval, the reporting event, or the moving speed. For details, refer to the related descriptions of "S401" above, and the details are not described herein again. It may be understood that, when the second time interval, the reporting event, or the moving speed is preset in the second management service provider entity, the third message may not include the three pieces of information.

It may be understood that the foregoing describes a plurality of different types of information that may be included in the third message, and the third message includes different information when being for requesting different content. The following cases are separately described.

Case 3.1: When the first message is for requesting to evaluate the respective service assurance satisfaction degrees in the plurality of first grids within the first duration, the third message is specifically for requesting to evaluate the respective service assurance satisfaction degrees in the plurality of first grids within the first duration. In other words, the case 3.1 corresponds to the foregoing case 1.1.

In this case, the third message may include at least one of the following: the information indicating the first duration, the region information, the information indicating the at least one network element, the evaluation mode, the network performance requirement, the continuous-evaluation indication, the second time interval, or the reporting event. For details about each piece of information, refer to the foregoing related descriptions, and the details are not described herein again.

Case 3.2: When the first message is for requesting to evaluate the respective service assurance satisfaction degrees in the plurality of first grids, the third message is specifically for requesting to evaluate the respective service assurance satisfaction degrees in the plurality of first grids, where the time periods for evaluating the service assurance satisfaction degrees in the plurality of first grids are at least partially different, the time periods are within the first duration, and the first region includes the plurality of first grids. In other words, the case 3.2 corresponds to the foregoing case 1.2.

In this case, the third message may include at least one of the following: the information indicating the first duration, the region information, the information indicating the at least one network element, the evaluation mode, the network performance requirement, the continuous-evaluation indication, the first time interval, the second time interval, or the reporting event. For details about each piece of information, refer to the foregoing related descriptions, and the details are not described herein again.

Optionally, before that the second management service provider entity sends the fourth message to the first management service provider entity based on the third message, the communication method may further include: The second management service provider entity constructs a network twin model based on the region information and the information indicating the at least one network element. The second management service provider entity obtains the first service assurance satisfaction degree by using the network twin model based on the third message.

A specific manner in which the second management service provider entity constructs the network twin model based on the region information and the information indicating the at least one network element is not limited in this embodiment of this application. The region information and the information indicating the at least one network element are for restricting a construction range of the network twin model and an evaluated-object range applied when a simulation task is performed by using the network twin model. A manner of collecting network data needed for constructing the network twin model is not limited in this embodiment of this application.

After constructing the network twin model, the second management service provider entity may start to evaluate the service assurance satisfaction degree in each first grid in the plurality of first grids. For example, an entire communication network in a specific time period may be predicted by using a trend, then a communication service of the terminal in the first grid (denoted as a first grid #1.2) is simulated, network quality within the time period is measured, and the network quality is compared with network performance, to obtain a service assurance satisfaction degree. The service assurance satisfaction degrees corresponding to the plurality of first grids may be obtained in parallel or in sequence. This is not limited. The specific time period varies in the case 1.1 and the case 1.2. Specifically, in the case 1.1, the specific time period is the first duration; and in the case 1.2, the specific time period is a time period for evaluating the service assurance satisfaction degree in the first grid #1.2.

In addition, for the case 1.2, when the third message includes the first time interval, the second management service provider entity may determine, based on the first duration and the first time interval, the time period for evaluating the service assurance satisfaction degree in each first grid. For example, the first duration is 9:00 to 10:00, the first time interval is 10 minutes (min), the plurality of first grids are 30 first grids in 10 rows and three columns, and the moving direction of the terminal is moving from left to right. In this case, it may be determined that a time period for evaluating service assurance satisfaction degrees in first grids in a 1^{st} column is 9:00 to 9:20, a time period for evaluating service assurance satisfaction degrees in first grids in a 2^{nd} column is 9:20 to 9:40, and a time period for evaluating service assurance satisfaction degrees in first grids in a 3^{rd} column is 9:40 to 10:00. When the third message does not include the first time interval, the second management service provider entity may determine the first time interval based on the first duration and the moving direction and the moving speed of the terminal, to further determine the time period for evaluating the service assurance satisfaction degree in each first grid.

It may be understood that there may be a plurality of representation forms of the service assurance satisfaction degree corresponding to each first grid. For example, the service assurance satisfaction degree corresponding to each first grid may be a percentage. For example, 80% indicates that measured network performance in the first grid meets 80% of the network performance requirement. Alternatively, the service assurance satisfaction degree corresponding to each first grid may indicate a degree of network performance relative to the network performance requirement. For example, as shown in FIG. 8, the service assurance satisfaction degree is classified into three levels, for example, a high level, a medium level, and a low level. If a ratio of the measured network performance to the network performance requirement is greater than or equal to 1, the ratio corresponds to the high level. If a ratio of the measured network performance to the network performance requirement is less than 1 and greater than or equal to 0.6, the ratio corresponds to the medium level. If a ratio of the measured network performance to the network performance requirement is less than 0.6, the ratio corresponds to the low level. Alternatively, the service assurance satisfaction degree corresponding to each first grid may be a measured network performance indicator, for example, latency of 20 milliseconds (ms).

In a second possible implementation, the third message may include at least one of the following: the information indicating the first duration or the information indicating the first region. For details, refer to the related descriptions of "S401" above, and the details are not described herein again. It may be understood that, in this case, the first management service provider entity does not process the first region, but directly forwards, to the second management service provider entity by using the third message, the information indicating the first duration and/or the information indicating the first region that are/is carried in the first message.

Optionally, the third message may include at least one of the following: the evaluation mode or the network performance requirement. For details, refer to the related descriptions of the foregoing "first possible implementation", and the details are not described herein again.

Optionally, the third message may include at least one of the following: the continuous-evaluation indication, the first time interval, the second time interval, the reporting event, or the moving speed. For details, refer to the related descriptions of the foregoing "first possible implementation", and the details are not described herein again.

It may be understood that the foregoing describes a plurality of different types of information that may be included in the third message, and the third message includes different information when being for requesting different content. The following cases are separately described.

Case 4.1: When the first message is for requesting to evaluate the respective service assurance satisfaction degrees in the plurality of first grids within the first duration, the third message is specifically for requesting to evaluate the respective service assurance satisfaction degrees in the plurality of first grids within the first duration. In other words, the case 4.1 corresponds to the foregoing case 1.1.

In this case, the third message may include at least one of the following: the information indicating the first duration, the information indicating the first region, the evaluation mode, the network performance requirement, the continuous-evaluation indication, the second time interval, or the reporting event. For details about each piece of information, refer to the foregoing related descriptions, and the details are not described herein again.

Case 4.2: When the first message is for requesting to evaluate the respective service assurance satisfaction degrees in the plurality of first grids, the third message is specifically for requesting to evaluate the respective service assurance satisfaction degrees in the plurality of first grids, where the time periods for evaluating the service assurance satisfaction degrees in the plurality of first grids are at least partially different, the time periods are within the first duration, and the first region includes the plurality of first grids. In other words, the case 4.2 corresponds to the foregoing case 1.2.

In this case, the third message may include at least one of the following: the information indicating the first duration, the information indicating the first region, the evaluation mode, the network performance requirement, the continuous-evaluation indication, the first time interval, the second time interval, or the reporting event. For details about each piece of information, refer to the foregoing related descriptions, and the details are not described herein again.

Optionally, before that the second management service provider entity sends the fourth message to the first management service provider entity based on the third message, the communication method may further include: The second management service provider entity constructs a network twin model based on the information indicating the first region. The second management service provider entity obtains the first service assurance satisfaction degree by using the network twin model based on the third message.

The second management service provider entity may divide the first region into the plurality of first grids based on the information indicating the first region and the evaluation granularity requirement, to obtain region information; obtain, based on the information indicating the first region, at least one network element whose service range includes the first region; and construct the network twin model based on the region information and the at least one network element.

It may be understood that a principle of obtaining the region information and the at least one network element by the second management service provider entity is similar to that of obtaining the region information and the at least one network element by the first management service provider entity. For same parts, reference may be made to each other, and details are not described herein again. In addition, for the obtaining, by the second management service provider entity, the first service assurance satisfaction degree by using the network twin model based on the third message, refer to the foregoing related descriptions. Details are not described herein again.

Case 2.2: The first management service provider entity generates the first service assurance satisfaction degree.

In this case, that the first management service provider entity sends, to the management service consumer based on the first message, the second message indicating the first service assurance satisfaction degree may specifically include: The first management service provider entity generates the first service assurance satisfaction degree based on the first message, and sends the second message to the management service consumer based on the first service assurance satisfaction degree. Correspondingly, the management service consumer receives the second message from the first management service provider entity. In other words, the first management service provider entity may autonomously generate the first service assurance satisfaction degree based on the first message, and does not need to obtain the first service assurance satisfaction degree from another entity.

Optionally, that the first management service provider entity generates the first service assurance satisfaction degree based on the first message may specifically include: The first management service provider entity obtains, based on the information indicating the first region, region information and information indicating at least one network element. The first management service provider entity constructs a network twin model based on the region information and the information indicating the at least one network element, and obtains the first service assurance satisfaction degree by using the network twin model.

It may be understood that, for the obtaining, by the first management service provider entity based on the information indicating the first region, the region information and the information indicating the at least one network element, refer to the related descriptions of the region information and the information indicating the at least one network element above. Details are not described herein again. The operations of constructing, by the first management service provider entity, the network twin model based on the region information and the information indicating the at least one network element, and obtaining the first service assurance satisfaction degree by using the network twin model are similar to the operations of constructing, by the second management service provider entity, the network twin model based on the region information and the information indicating the at least one network element, and obtaining the first service assurance satisfaction degree by using the network twin model, reference may be made to the foregoing related descriptions, and details are not described herein again.

S403: The management service consumer determines the moving policy in the first region within the first duration based on the second message.

The moving policy may indicate at least one moving route, and may include the at least one moving route, or include the at least one moving route and a feature corresponding to the at least one moving route. For example, the moving policy includes a route #a, a route #b, and a route #c. For another example, the moving policy includes a route #a, a route #b, a feature of the route #a, for example, that the route is the shortest, and a feature of the route #b, for example, that the route is the longest.

In a possible implementation, when the second message does not include the time information, the management service consumer may determine the moving policy based on the respective identifiers of the plurality of first grids, the respective service assurance satisfaction degrees in the plurality of first grids, and the respective locations of the plurality of first grids. For example, the management service consumer may first determine N first grids with higher service assurance satisfaction degrees from the plurality of first grids, where N is an integer greater than 0; and then determine the moving policy based on the N first grids and the moving direction in which the terminal is predicted to move.

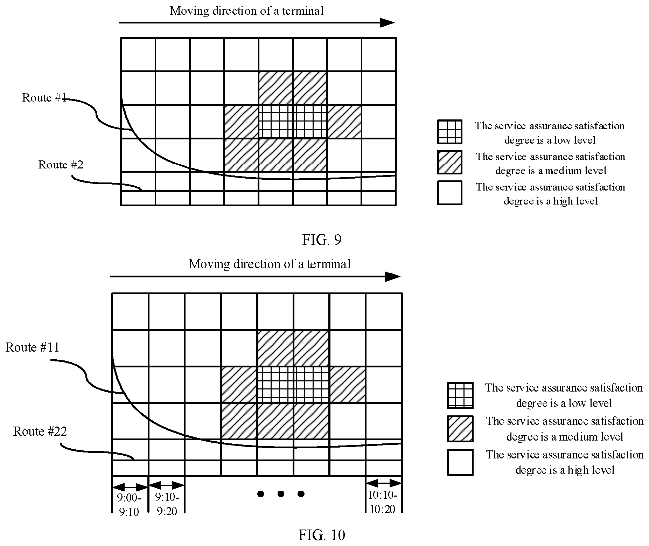

For example, as shown in FIG. 9, the first region is divided into 40 first grids in five rows and eight columns, service assurance satisfaction degrees corresponding to a first grid in a 5^{th} column and a 3^{rd} row and a first grid in a 6^{th} column and the 3^{rd} row are at a low level, service assurance satisfaction degrees corresponding to a first grid in a 4^{th} column and the 3^{rd} row, a first grid in the 4^{th} column and a 4^{th} row, a first grid in the 5^{th} column and a 2^{nd} row, a first grid in the 5^{th} column and the 4^{th} row, a first grid in the 6^{th} column and the 2^{nd} row, a first grid in the 6^{th} column and the 4^{th} row, and a first grid in a 7^{th} column and the 3^{rd} row are at a medium level, and service assurance satisfaction degrees corresponding to remaining first grids are at a high level. The terminal moves from left to right. In this case, the management service consumer may determine a plurality of moving routes such as a route #1 and a route #2 from the remaining first grids.

In another possible implementation, when the second message includes the time information, the management service consumer may determine the moving policy based on the respective identifiers of the plurality of first grids, the respective service assurance satisfaction degrees in the plurality of first grids, the respective locations of the plurality of first grids, and the time information. For example, the management service consumer may first determine N first grids with higher service assurance satisfaction degrees from the plurality of first grids, where N is an integer greater than 0; and then determine the moving policy based on the N first grids, the moving direction in which the terminal is predicted to move, and the time information.

For example, as shown in FIG. 10, the first region is divided into 40 first grids in five rows and eight columns, service assurance satisfaction degrees corresponding to a first grid in a 5^{th} column and a 3^{rd} row and a first grid in a 6^{th} column and the 3^{rd} row are at a low level, service assurance satisfaction degrees corresponding to a first grid in a 4^{th} column and the 3^{rd} row, a first grid in the 4^{th} column and a 4^{th} row, a first grid in the 5^{th} column and a 2^{nd} row, a first grid in the 5^{th} column and the 4^{th} row, a first grid in the 6^{th} column and the 2^{nd} row, a first grid in the 6^{th} column and the 4^{th} row, and a first grid in a 7^{th} column and the 3^{rd} row are at a medium level, and service assurance satisfaction degrees corresponding to remaining first grids are at a high level. A time period corresponding to first grids in a 1^{st} column is 9:00 to 9:10, and a time period corresponding to first grids in each subsequent column is 10 min later than a time period corresponding to first grids in a previous column. The terminal moves from left to right. In this case, the management service consumer may determine a plurality of moving routes such as a route #11 and a route #22 from the remaining first grids based on time periods corresponding to different first grids.

In conclusion, the management service consumer may obtain, from the first management service provider entity, the first service assurance satisfaction degree that can reflect network quality in the first region within the first duration, and may determine the moving policy for the terminal in the first region within the first duration based on the first service assurance satisfaction degree. In other words, the management service consumer may determine the moving policy from a region with good network quality in the first region. In this way, network quality experienced by the terminal when the terminal moves within the first duration based on the moving policy can be ensured without affecting network quality in each region.

### Scenario 1:

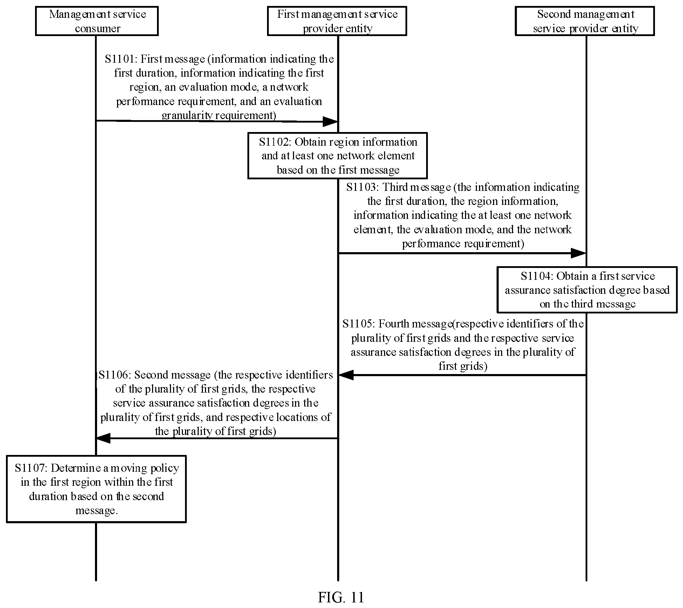

FIG. 11 is a schematic flowchart 2 of a communication method according to an embodiment of this application. The communication method is applicable to the foregoing communication system, and mainly relates to the management service consumer, the first management service provider entity, and the second management service provider entity. In the scenario 1, the management service consumer may request the first management service provider entity to evaluate a service assurance satisfaction degree in a first region within first duration. The first management service provider entity may obtain, from the second management service provider entity, service assurance satisfaction degrees within the first duration in a plurality of first grids included in the first region, and send the service assurance satisfaction degrees to the management service consumer.

As shown in FIG. 11, a procedure for the communication method is as follows:
S1101: The management service consumer sends a first message to the first management service provider entity. Correspondingly, the first management service provider entity receives the first message from the management service consumer.

The first message is for requesting to evaluate the service assurance satisfaction degree in the first region within the first duration, and the first message includes: information indicating the first duration, information indicating the first region, an evaluation mode, a network performance requirement, and an evaluation granularity requirement. It may be understood that, in the scenario 1, the first message is specifically for requesting the service assurance satisfaction degrees within the first duration in the plurality of first grids included in the first region.

For details about the first message, refer to the related descriptions of "S401" above, and the details are not described herein again.

S1102: The first management service provider entity obtains region information and at least one network element based on the first message.

Specifically, the first management service provider entity may divide the first region into the plurality of grids based on the information indicating the first region, to obtain the region information; and obtain, based on the first region, the at least one network element whose service range covers the first region.

S1103: The first management service provider entity sends a third message to the second management service provider entity. Correspondingly, the second management service provider entity receives the third message from the first management service provider entity.

The third message is for requesting to evaluate the service assurance satisfaction degree in the first region within the first duration, and the third message includes: the information indicating the first duration, the region information, information indicating the at least one network element, the evaluation mode, and the network performance requirement. It may be understood that, in the scenario 1, the third message is specifically for requesting the service assurance satisfaction degrees within the first duration in the plurality of first grids included in the first region.

For details about the third message, refer to the related descriptions of "S402" above, and the details are not described herein again.

S1104: The second management service provider entity obtains a first service assurance satisfaction degree based on the third message.

Specifically, the second management service provider entity constructs a network twin model based on the region information and the information indicating the at least one network element. The second management service provider entity obtains the first service assurance satisfaction degree by using the network twin model based on the third message.

S1105: The second management service provider entity sends a fourth message to the first management service provider entity. Correspondingly, the first management service provider entity receives the fourth message from the second management service provider entity.

The fourth message includes a service assurance satisfaction degree in each first grid in the plurality of first grids included in the first region, and the fourth message includes: respective identifiers of the plurality of first grids and the respective service assurance satisfaction degrees in the plurality of first grids.

S1106: The first management service provider entity sends a second message to the management service consumer. Correspondingly, the management service consumer receives the second message from the first management service provider entity.

The second message includes the service assurance satisfaction degree in each first grid in the plurality of first grids included in the first region, and the second message includes: the respective identifiers of the plurality of first grids, the respective service assurance satisfaction degrees in the plurality of first grids, and respective locations of the plurality of first grids.

S1107: The management service consumer determines a moving policy in the first region within the first duration based on the second message.

It may be understood that for specific implementations of S1101 to S1107, refer to the related descriptions of S401 to S403 above. Details are not described herein again.

### Scenario 2:

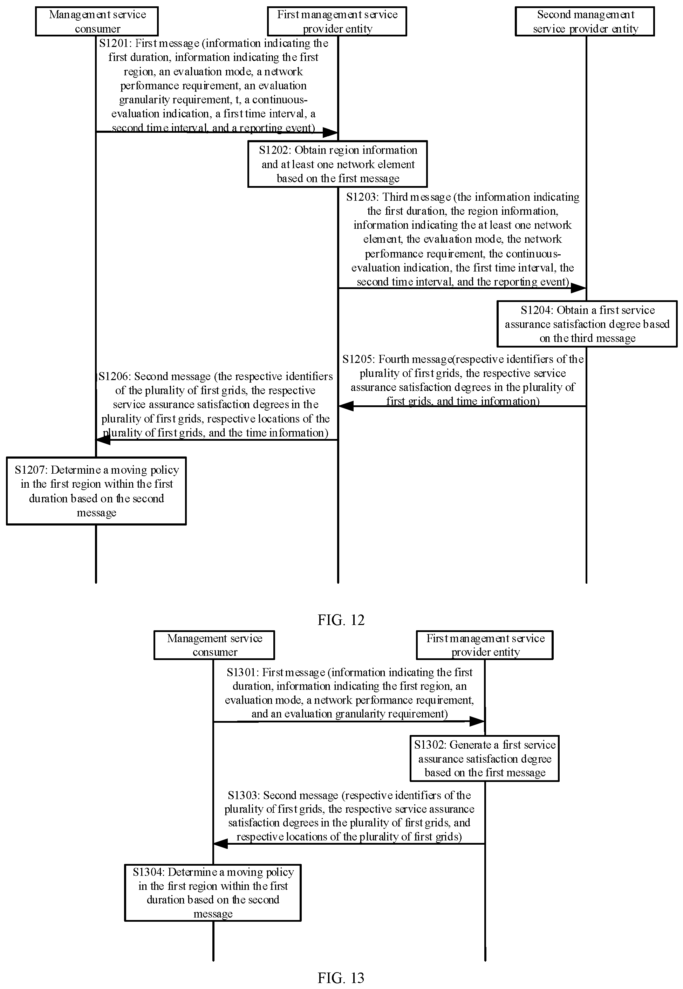

FIG. 12 is a schematic flowchart 3 of a communication method according to an embodiment of this application. The communication method is applicable to the foregoing communication system, and mainly relates to the management service consumer, the first management service provider entity, and the second management service provider entity. In the scenario 2, the management service consumer may request the first management service provider entity to evaluate a service assurance satisfaction degree in a first region within first duration. The first management service provider entity may obtain, from the second management service provider entity, service assurance satisfaction degrees in a plurality of first grids included in the first region, and send the service assurance satisfaction degrees to the management service consumer. Time periods for evaluating the service assurance satisfaction degrees in the plurality of first grids are at least partially different, and the time periods are within the first duration.

As shown in FIG. 12, a procedure for the communication method is as follows:
S1201: The management service consumer sends a first message to the first management service provider entity. Correspondingly, the first management service provider entity receives the first message from the management service consumer.

The first message is for requesting to evaluate the service assurance satisfaction degree in the first region within the first duration, and the first message includes: information indicating the first duration, information indicating the first region, an evaluation mode, a network performance requirement, an evaluation granularity requirement, a continuous-evaluation indication, a first time interval, a second time interval, and a reporting event. It may be understood that, in the scenario 2, the first message is specifically for requesting the service assurance satisfaction degrees in the plurality of first grids included in the first region, the time periods for evaluating the service assurance satisfaction degrees in the plurality of first grids are at least partially different, and the time periods are within the first duration.

For details about the first message, refer to the related descriptions of "S401" above, and the details are not described herein again.

S1202: The first management service provider entity obtains region information and at least one network element based on the first message.

Specifically, the first management service provider entity may divide the first region into the plurality of grids based on the information indicating the first region, to obtain the region information; and obtain, based on the first region, the at least one network element whose service range covers the first region.

S1203: The first management service provider entity sends a third message to the second management service provider entity. Correspondingly, the second management service provider entity receives the third message from the first management service provider entity.

The third message is for requesting to evaluate the service assurance satisfaction degree in the first region within the first duration, and the third message includes: the information indicating the first duration, the region information, information indicating the at least one network element, the evaluation mode, the network performance requirement, the continuous-evaluation indication, the first time interval, the second time interval, and the reporting event. It may be understood that, in the scenario 1, the third message is specifically for requesting the service assurance satisfaction degrees in the plurality of first grids included in the first region, the time periods for evaluating the service assurance satisfaction degrees in the plurality of first grids are at least partially different, and the time periods are within the first duration.

For details about the third message, refer to the related descriptions of "S402" above, and the details are not described herein again.

S1204: The second management service provider entity obtains a first service assurance satisfaction degree based on the third message.

Specifically, the second management service provider entity constructs a network twin model based on the region information and the information indicating the at least one network element. The second management service provider entity obtains the first service assurance satisfaction degree by using the network twin model based on the third message.

S1205: The second management service provider entity sends a fourth message to the first management service provider entity. Correspondingly, the first management service provider entity receives the fourth message from the second management service provider entity.

The fourth message includes a service assurance satisfaction degree in each first grid in the plurality of first grids included in the first region, and the fourth message includes: respective identifiers of the plurality of first grids, the respective service assurance satisfaction degrees in the plurality of first grids, and time information.

S1206: The first management service provider entity sends a second message to the management service consumer. Correspondingly, the management service consumer receives the second message from the first management service provider entity.

The second message includes the service assurance satisfaction degree in each first grid in the plurality of first grids included in the first region, and the second message includes: the respective identifiers of the plurality of first grids, the respective service assurance satisfaction degrees in the plurality of first grids, respective locations of the plurality of first grids, and the time information.

S1207: The management service consumer determines a moving policy in the first region within the first duration based on the second message.

It may be understood that for specific implementations of S1201 to S1207, refer to the related descriptions of S401 to S403 above. Details are not described herein again.

### Scenario 3:

FIG. 13 is a schematic flowchart 4 of a communication method according to an embodiment of this application. The communication method is applicable to the foregoing communication system, and mainly relates to the management service consumer and the first management service provider entity. In the scenario 3, the management service consumer may request the first management service provider entity to evaluate a service assurance satisfaction degree in a first region within first duration. The first management service provider entity generates service assurance satisfaction degrees within the first duration in a plurality of first grids included in the first region, and sends the service assurance satisfaction degrees to the management service consumer.

As shown in FIG. 13, a procedure for the communication method is as follows:
S1301: The management service consumer sends a first message to the first management service provider entity. Correspondingly, the first management service provider entity receives the first message from the management service consumer.

The first message is for requesting to evaluate the service assurance satisfaction degree in the first region within the first duration, and the first message includes: information indicating the first duration, information indicating the first region, an evaluation mode, a network performance requirement, and an evaluation granularity requirement. It may be understood that, in the scenario 3, the first message is specifically for requesting the service assurance satisfaction degrees within the first duration in the plurality of first grids included in the first region.

For details about the first message, refer to the related descriptions of "S401" above, and the details are not described herein again.

S1302: The first management service provider entity generates a first service assurance satisfaction degree based on the first message.

S1303: The first management service provider entity sends a second message to the management service consumer. Correspondingly, the management service consumer receives the second message from the first management service provider entity.

The second message includes a service assurance satisfaction degree in each first grid in the plurality of first grids included in the first region, and the second message includes: respective identifiers of the plurality of first grids, the respective service assurance satisfaction degrees in the plurality of first grids, and respective locations of the plurality of first grids.

S1304: The management service consumer determines a moving policy in the first region within the first duration based on the second message.

It may be understood that for specific implementations of S1301 to S1304, refer to the related descriptions of S401 to S403 above. Details are not described herein again.

### Scenario 4:

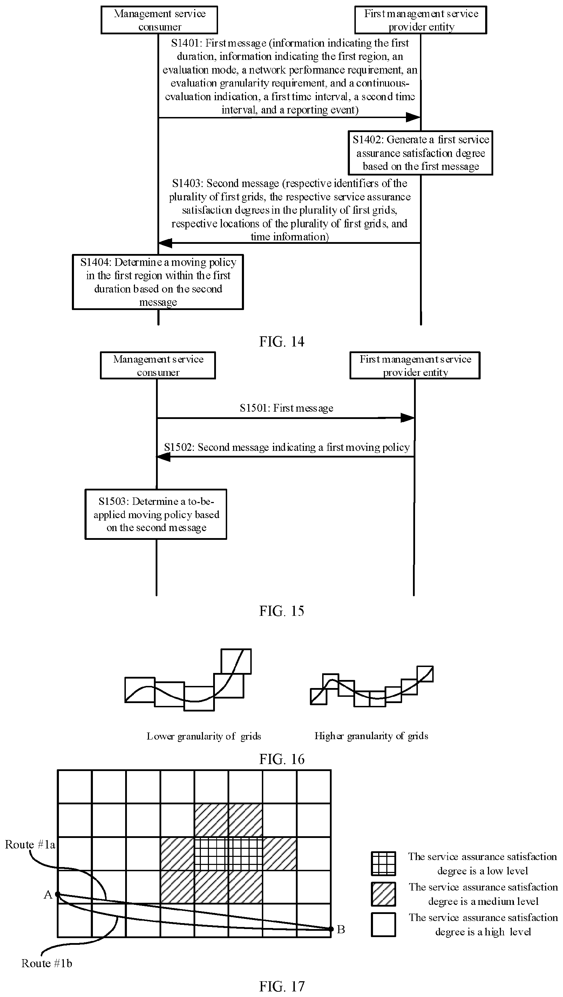

FIG. 14 is a schematic flowchart 5 of a communication method according to an embodiment of this application. The communication method is applicable to the foregoing communication system, and mainly relates to the management service consumer, the first management service provider entity, and the second management service provider entity. In the scenario 4, the management service consumer may request the first management service provider entity to evaluate a service assurance satisfaction degree in a first region within first duration. The first management service provider entity may generate service assurance satisfaction degrees in a plurality of first grids included in the first region, and send the service assurance satisfaction degrees to the management service consumer. Time periods for evaluating the service assurance satisfaction degrees in the plurality of first grids are at least partially different, and the time periods are within the first duration.

As shown in FIG. 14, a procedure for the communication method is as follows:
S1401: The management service consumer sends a first message to the first management service provider entity. Correspondingly, the first management service provider entity receives the first message from the management service consumer.

The first message is for requesting to evaluate the service assurance satisfaction degree in the first region within the first duration, and the first message includes: information indicating the first duration, information indicating the first region, an evaluation mode, a network performance requirement, an evaluation granularity requirement, a continuous-evaluation indication, a first time interval, a second time interval, and a reporting event. It may be understood that, in the scenario 4, the first message is specifically for requesting the service assurance satisfaction degrees in the plurality of first grids included in the first region, the time periods for evaluating the service assurance satisfaction degrees in the plurality of first grids are at least partially different, and the time periods are within the first duration.

For details about the first message, refer to the related descriptions of "S401" above, and the details are not described herein again.

S1402: The first management service provider entity generates a first service assurance satisfaction degree based on the first message.

S1403: The first management service provider entity sends a second message to the management service consumer. Correspondingly, the management service consumer receives the second message from the first management service provider entity.

The second message includes a service assurance satisfaction degree in each first grid in the plurality of first grids included in the first region, and the second message includes: respective identifiers of the plurality of first grids, the respective service assurance satisfaction degrees in the plurality of first grids, respective locations of the plurality of first grids, and time information.

S1404: The management service consumer determines a moving policy in the first region within the first duration based on the second message.

It may be understood that for specific implementations of S1401 to S1404, refer to the related descriptions of S401 to S403 above. Details are not described herein again.

For example, FIG. 15 is a schematic flowchart 6 of a communication method according to an embodiment of this application. The method may be applied to communication between the management service consumer and the first management service provider entity in the foregoing communication system.

As shown in FIG. 15, a procedure for the communication method is as follows:
S1501: The management service consumer sends a first message to the first management service provider entity. Correspondingly, the first management service provider entity receives the first message from the management service consumer.

The first message is for requesting to provide a moving policy from a first start point to a first end point within first duration.

The first duration is duration for which a terminal is predicted to move. For details, refer to the related descriptions of "S401" above, and the details are not described herein again. The first start point is a start point from which the terminal is predicted to move. The first end point is an end point to which the terminal is predicted to move. The moving policy represents a route from the first start point to the first end point within the first duration, and may include at least one route, or include the at least one route and a feature corresponding to the at least one route. For example, the moving policy includes a route #a, a route #b, and a route #c. For another example, the moving policy includes a route #a, a route #b, a feature of the route #a, for example, that the route is the shortest, and a feature of the route #b, for example, that the route is the longest. This is not limited. It may be understood that the terminal in this embodiment of this application is a terminal that may be managed by the management service consumer.

Optionally, the first message includes at least one of the following: information indicating the first start point, information indicating the first end point, or information indicating the first duration.

Both the information indicating the first start point and the information indicating the first end point may be coordinate points, for example, longitude and latitude coordinates. For the information indicating the first duration, refer to the related descriptions of "S401" above. Details are not described herein again.

The management service consumer may determine the first duration, the first start point, or the first end point based on an actual status of the terminal, for example, determine the first duration based on the duration for which the terminal is predicted to move, and/or determine the first start point and the first end point based on information such as a region in which the terminal is predicted to move; and send, to the first management service provider entity, the first message carrying the information indicating the first start point, the information indicating the first end point, or the information indicating the first duration, to determine the moving policy based on these pieces of information.

It may be understood that, when the first start point, the first end point, or the first duration is preset in the first management service provider entity, the first message may not include the information indicating the first start point, the information indicating the first end point, or the information indicating the first duration. In other words, if the first message does not include the information indicating the first start point, the information indicating the first end point, or the information indicating the first duration, it indicates that the information indicating the first start point, the information indicating the first end point, or the information indicating the first duration has been preset in the first management service provider entity.

Optionally, the first message includes at least one of the following: a policy planning indication, a network performance requirement, an evaluation granularity requirement, a passing point, a passing region, a forbidden region, or a policy preference.

The policy planning indication may indicate that a moving policy needs to be provided. To be specific, when the message includes the policy planning indication, it indicates that the moving policy needs to be provided; or when the message does not include the policy planning indication, it indicates that the moving policy does not need to be provided.

Alternatively, the policy planning indication may indicate whether a moving policy needs to be provided. When the moving policy needs to be provided, the policy planning indication indicates a request for providing the moving policy. For example, in this embodiment of this application, if the first message includes the policy planning indication, the policy planning indication indicates the request for providing the moving policy. When the moving policy does not need to be provided, the policy planning indication indicates not to provide the moving policy. For example, in the embodiment shown in FIG. 4, if the first message includes the policy planning indication, the policy planning indication indicates not to provide the moving policy. It may be understood that different bits may indicate different cases of the policy planning indication. For example, a bit 0 indicates that the moving policy needs to be provided, and a bit 1 indicates that the moving policy does not need to be provided. To be specific, when a parameter value of an information element that is in the first message and that indicates the policy planning indication is 0, it indicates that the first message is for requesting to provide the moving policy from the first start point to the first end point within the first duration; or when a parameter value of an information element that is in the first message and that indicates the policy planning indication is 1, it indicates that the first message is not for requesting to provide the moving policy from the first start point to the first end point within the first duration.

The network performance requirement is a requirement, for example, a throughput requirement, a latency requirement, or a video backhaul rate, of the management service consumer on network performance of a communication service performed when the terminal moves. For details, refer to the related descriptions of "S401" above, and the details are not described herein again.

The evaluation granularity requirement indicates a size of each grid in a plurality of grids included in a region. For details, refer to the related descriptions of "S401" above, and the details are not described herein again. The region is a region including the first start point and the first end point, and may be specifically determined based on an actual situation. For example, the region is set to be large or small.

The passing point indicates a place that needs to be passed through, and the passing point may be represented by longitude and latitude coordinates. In other words, the moving policy requested by the management service consumer needs to pass through the place.

The passing region indicates a region that needs to be passed through. The passing region may be represented by a plurality of coordinate points included in the region, or may be represented by using another method that can represent the region. This is not limited. In other words, the moving policy requested by the management service consumer needs to pass through the region.

The forbidden region indicates a place or a region that cannot be passed through. The place may be represented by longitude and latitude coordinates. The region may be represented by a plurality of coordinate points included in the region, or may be represented by using another method that can represent the region. This is not limited. In other words, the moving policy requested by the management service consumer cannot pass through the place or the region.

The policy preference represents a requirement on the moving policy. For example, the route is less than 50 m. This may be specifically set based on an actual situation, and is not limited.

It may be understood that the management service consumer may determine, based on an actual situation, each parameter included in the first message. For example, when there is a requirement on the policy, the management service consumer may set the policy preference, and include the policy preference in the first message. For another example, when there is a place that needs to be passed through, the management service consumer may set the passing point, and include the passing point in the first message. In addition, when the network performance requirement, the evaluation granularity requirement, the passing point, the passing region, the forbidden region, or the policy preference is preset in the first management service provider entity, the first message may not include the network performance requirement, the evaluation granularity requirement, the passing point, the passing region, the forbidden region, or the policy preference.

S1502: The first management service provider entity sends, to the management service consumer based on the first message, a second message indicating a first moving policy. Correspondingly, the management service consumer receives, from the first management service provider entity, the second message indicating the first moving policy.

The first moving policy indicates a moving policy from the first start point to the first end point within the first duration. For example, the first moving policy may include at least one moving route from the first start point to the first end point within the first duration. For another example, the first moving policy may include at least one moving route from the first start point to the first end point within the first duration, a feature corresponding to the route, and a service assurance satisfaction degree on the route (described below).

A service assurance satisfaction degree corresponding to the first moving policy meets a preset requirement. It may be understood that, that the service assurance satisfaction degree meets the preset requirement may indicate that network quality is good. To be specific, when the terminal uses the first moving policy, for example, when the terminal moves within the first duration along the moving route corresponding to the first moving policy, network quality experienced by the terminal during the movement can be ensured. The service assurance satisfaction degree represents a degree of matching between network performance and the network performance requirement. For details, refer to the related descriptions of S401 above, and the details are not described herein again. The service assurance satisfaction degree corresponding to the first moving policy may be a service assurance satisfaction degree on the route included in the first moving policy. A preset requirement is for selecting a moving policy with a high service assurance satisfaction degree, and may be that a service assurance satisfaction degree corresponding to a moving policy reaches a satisfaction degree threshold, for example, 90%, or may be mobility policies corresponding to first M service satisfaction degrees after service satisfaction degrees corresponding to a plurality of obtained mobility policies are sorted in descending order, where M is a positive integer greater than 0. In other words, a moving policy corresponding to a service assurance satisfaction degree that meets the preset requirement is a moving policy that can ensure the network quality experienced by the terminal during the movement.

Optionally, the second message may include at least one of the following: a first route, an identifier of the first route, a service assurance satisfaction degree on the first route, or a feature of the first route.

The first route is a route from the first start point to the first end point within the first duration. That the service assurance satisfaction degree corresponding to the first route meets the preset requirement means: When the terminal moves along the first route within the first duration, network quality experienced by the terminal during the movement can be ensured. The first route is represented in a plurality of forms. For example, if the route is represented by a plurality of coordinate points, the plurality of coordinate points may be connected to obtain the route. For another example, if the route is represented by a plurality of grids that cover the route, the plurality of grids may be sequentially connected to obtain the route. This is not limited. It may be understood that, as shown in FIG. 16, when a route is represented by a plurality of grids, a higher granularity of the plurality of grids, namely, a smaller size of the grids, may indicate more accurate representation of the route. Correspondingly, a lower granularity of the plurality of grids, namely, a larger size of the grids, indicates lower accuracy of the route represented by the plurality of grids. It may be further understood that the first route may be one or more routes. For example, the first route includes a route #1, a route #2, and a route #3.

For the service assurance satisfaction degree, refer to the foregoing related descriptions. Details are not described herein again. The service assurance satisfaction degree on the first route is a degree of matching between network performance in a region in which the first route is located and the network performance requirement. It may be understood that when the first route includes a plurality of routes, the service assurance satisfaction degree on the first route includes service assurance satisfaction degrees respectively corresponding to the plurality of routes. For example, if the first route includes the route #1, the route #2, and the route #3, the service assurance satisfaction degree on the first route includes a service assurance satisfaction degree #1 corresponding to the route #1, a service assurance satisfaction degree #2 corresponding to the route #2, and a service assurance satisfaction degree #3 corresponding to the route #3.

For example, the second message includes the first route, the service assurance satisfaction degree on the first route, and the feature of the first route, where the first route is a route #a, the service assurance satisfaction degree on the first route is a service assurance satisfaction degree #a, and the feature of the first route is a feature #a. In this case, the route #a, the service assurance satisfaction degree #a, and the feature #a may be directly sent to the management service consumer.

For another example, the second message includes the first route, the identifier of the first route, the service assurance satisfaction degree on the first route, and the feature of the first route, where the first route includes a route #11, a route #22, and a route #33; the identifier of the first route includes an identifier (identity, ID) #11 corresponding to the route #11, an ID #22 corresponding to the route #22, and an ID #33 corresponding to the route #33; the service assurance satisfaction degree on the first route includes: a service assurance satisfaction degree #11 corresponding to the route #11, a service assurance satisfaction degree #22 corresponding to the route #22, and a service assurance satisfaction degree #33 corresponding to the route #33; and the feature of the first route includes a feature #11 corresponding to the route #11, a feature #22 corresponding to the route #22, and a feature #33 corresponding to the route #33. The route #11, the ID #11, the service assurance satisfaction degree #11, and the feature #11 correspond to each other, and the correspondence is sent to the management service consumer. For example, the four pieces of information in the correspondence are set in a same tuple, to represent the correspondence among the different information. Other information is processed in a similar way, and details are not described herein.

It can be learned that in this embodiment of this application, there is a correspondence among the first route, the identifier of the first route, the service assurance satisfaction degree on the first route, or the feature of the first route. In addition, when the first route includes a plurality of routes, the correspondence needs to be sent to the management service consumer. In addition, when the first route includes one route, the second message may not include the identifier of the first route. When the first route includes a plurality of routes, the second message may include the identifier of the first route, to help the management service consumer distinguish between the routes.

It may be further understood that there are a plurality of manners of obtaining the first moving policy. For example, the first moving policy may be obtained by the first management service provider entity from another entity (for example, the second management service provider entity), or may be autonomously generated by the first management service provider entity. The following cases are separately described.

Case 1: The first management service provider entity obtains the first moving policy from the second management service provider entity.

In this case, that the first management service provider entity sends, to the management service consumer based on the first message, the second message indicating the first moving policy may specifically include: The first management service provider entity obtains the first moving policy from the second management service provider entity based on the first message, and sends the second message to the management service consumer based on the first moving policy. Correspondingly, the management service consumer receives the second message from the first management service provider entity. In other words, the first management service provider entity may obtain the first moving policy from the second management service provider entity, and the first management service provider entity does not need to generate the first moving policy based on the first message.

Specifically, that the first management service provider entity obtains the first moving policy from the second management service provider entity based on the first message may specifically include: The first management service provider entity sends a third message to the second management service provider entity based on the first message, where the third message is for requesting to provide the moving policy from the first start point to the first end point within the first duration. Correspondingly, the second management service provider entity receives the third message from the first management service provider entity. The second management service provider entity sends, to the first management service provider entity, a fourth message indicating the first moving policy. Correspondingly, the first management service provider entity receives, from the second management service provider entity, the fourth message indicating the first moving policy.

Optionally, the third message includes at least one of the following: the information indicating the first start point, the information indicating the first end point, the information indicating the first duration, region information, or information indicating at least one network element.

For the information indicating the first start point and the information indicating the first end point, refer to the related descriptions of "S1501" above. For the information indicating the first duration, refer to the related descriptions of "S401" above. Details are not described herein again.

The region information indicates a plurality of first grids obtained by dividing a first region, and the region information may include at least one of the following: respective identifiers of the plurality of first grids, a size of the plurality of first grids, or respective locations of the plurality of first grids. The first region includes the first start point and the first end point, in other words, the first region may cover the first start point and the first end point. It may be understood that the first region may be determined based on an actual situation, the first start point, and the first end point. For example, a size of the first region may be preset, and the first region is determined based on the size, the first start point, and the first end point. For another example, a shape of the first region may be preset, and the first region is determined based on the shape, the first start point, and the first end point. This is not limited.

A service range of the at least one network element includes the first region, in other words, the service range of the at least one network element may cover the first region. The at least one network element may be determined by the first management service provider entity based on the first region. For example, the first management service provider entity may determine, based on the first region, network elements configured to provide network services in the first region, and then determine, based on the network elements, the at least one network element whose service range can cover the first region. The first region includes the first start point and the first end point. For details, refer to the foregoing related descriptions, and the details are not described herein again. For the information indicating the at least one network element, refer to the related descriptions of the "case 2.1 in S402" above. Details are not described herein again.

It may be understood that, after receiving the first message, the first management service provider entity may obtain, based on the first message, the information indicating the first start point, the information indicating the first end point, the information indicating the first duration, the region information, and the information indicating the at least one network element, and send these pieces of information to the second management service provider entity by using the third message, so that the second management service provider entity obtains the first moving policy based on the third message.

Optionally, that the first management service provider entity sends the third message to the second management service provider entity based on the first message may specifically include: The first management service provider entity obtains, based on the first message, at least one of the following information: the region information or the information indicating the at least one network element. The first management service provider entity sends the third message to the second management service provider entity based on the first message and the at least one of the following information. For the obtaining, by the first management service provider entity, the region information and/or the information indicating the at least one network element, refer to the related descriptions of the region information and the information indicating the at least one network element above. Details are not described herein again.

Optionally, the third message includes at least one of the following: an evaluation mode, the policy planning indication, the network performance requirement, the passing point, the forbidden region, or the policy preference.

The evaluation mode indicates to divide a region into a plurality of grids, and reflect a service assurance satisfaction degree in the region at a grid granularity. For details, refer to the related descriptions of "S401" above, and the details are not described herein again. It may be understood that, in this embodiment of this application, the region is a region including the first start point and the first end point, in other words, the region may cover the first start point and the first end point. In addition, the evaluation mode is determined by the first management service provider entity, to be specific, the first management service provider entity may indicate, by using the evaluation mode, to reflect the service assurance satisfaction degree in the region at the grid granularity. For the policy planning indication, the network performance requirement, the passing point, the passing region, the forbidden region, and the policy preference, refer to the related descriptions of "S1501" above. Details are not described herein again.

It may be understood that if the evaluation mode, the policy planning indication, the network performance requirement, the passing point, the forbidden region, or the policy preference is preset in the second management service provider entity, the third message may not include the evaluation mode, the policy planning indication, the network performance requirement, the passing point, the forbidden region, or the policy preference.

Optionally, the fourth message may include at least one of the following: the first route, the identifier of the first route, the service assurance satisfaction degree on the first route, or the feature of the first route, where the first route is the route from the first start point to the first end point within the first duration, and the service assurance satisfaction degree represents the degree of matching between the network performance and the network performance requirement. It may be understood that the information included in the fourth message is the same as the information included in the second message. In other words, after receiving the fourth message, the first management service provider entity may forward the information included in the fourth message to the management service consumer by using the second message. Therefore, for the information included in the fourth message, refer to the related descriptions of the foregoing "second message". Details are not described herein again.

Optionally, before that the second management service provider entity sends, to the first management service provider entity, the fourth message indicating the first moving policy, the communication method may further include: The second management service provider entity constructs a network twin model based on the region information and the information indicating the at least one network element. The second management service provider entity obtains the first moving policy by using the network twin model based on the third message.

The second management service provider entity constructs the network twin model based on the region information and the information indicating the at least one network element; and after constructing the network twin model, the second management service provider entity may start to evaluate a service assurance satisfaction degree in each first grid in the plurality of first grids. For details, refer to the related descriptions of the "case 2.1 in S402" above, and the details are not described herein again. After obtaining the service assurance satisfaction degree corresponding to each first grid, the second management service provider entity may determine, based on the service assurance satisfaction degree corresponding to each first grid, at least one route that meets a service assurance requirement.

For example, as shown in FIG. 17, the first region is divided into 40 first grids in five rows and eight columns, service assurance satisfaction degrees corresponding to a first grid in a 5^{th} column and a 3^{rd} row and a first grid in a 6^{th} column and the 3^{rd} row are low, service assurance satisfaction degrees corresponding to a first grid in a 4^{th} column and the 3^{rd} row, a first grid in the 4^{th} column and a 4^{th} row, a first grid in the 5^{th} column and a 2^{nd} row, a first grid in the 5^{th} column and the 4^{th} row, a first grid in the 6^{th} column and the 2^{nd} row, a first grid in the 6^{th} column and the 4^{th} row, and a first grid in a 7^{th} column and the 3^{rd} row are medium, and service assurance satisfaction degrees corresponding to remaining first grids are high. The first start point is A, and the first end point is B. The second management service provider entity may determine a route in the first grids with the high service assurance satisfaction degrees, in other words, determine the route, for example, a route #1a and a route #1b, in the remaining first grids.

After the at least one route is determined based on the preset requirement, a service assurance satisfaction degree on the at least one route, a feature of the at least one route, and an identifier of the at least one route may be determined based on the at least one route, and these pieces of information are sent to the first management service provider entity by using the fourth message.

It may be understood that, in a process of determining the at least one route based on the service assurance satisfaction degree corresponding to each first grid, the at least one route may be determined with reference to at least one of the following: the passing point, the passing region, the forbidden region, or the policy preference.

Case 2: The first management service provider entity generates the first moving policy.

In this case, that the first management service provider entity sends, to the management service consumer based on the first message, the second message indicating the first moving policy may specifically include: The first management service provider entity generates the first moving policy based on the first message, and sends the second message to the management service consumer based on the first moving policy. Correspondingly, the management service consumer receives the second message from the first management service provider entity. In other words, the first management service provider entity may autonomously generate the first moving policy based on the first message, and does not need to obtain the first moving policy from another entity.

Optionally, that the first management service provider entity generates the first moving policy based on the first message may specifically include: The first management service provider entity obtains, based on the first message, region information and information indicating at least one network element. The first management service provider entity constructs a network twin model based on the region information and the information indicating the at least one network element, and obtains the first moving policy by using the network twin model.

It may be understood that, for the obtaining, by the first management service provider entity based on the first message, the region information and the information indicating the at least one network element, refer to the foregoing related descriptions of the region information and the information indicating the at least one network element. Details are not described herein again. The operations of constructing, by the first management service provider entity, the network twin model based on the region information and the information indicating the at least one network element, and obtaining the first moving policy by using the network twin model are similar to the operations of constructing, by the second management service provider entity, the network twin model based on the region information and the information indicating the at least one network element, and obtaining the first moving policy by using the network twin model, reference may be made to the foregoing related descriptions, and details are not described herein again.

S1503: The management service consumer determines a to-be-applied moving policy based on the second message.

When the first moving policy indicated by the second message includes one route, in other words, the first route includes one route, the first moving policy is the to-be-applied moving policy of the management service consumer, in other words, the management service consumer uses the route. When the first moving policy indicated by the second message includes a plurality of routes, in other words, the first route includes a plurality of routes, the management service consumer may determine, from the plurality of routes based on an actual situation, for example, the feature of the first route or the service assurance satisfaction degree on the first route, a route to be subsequently applied, in other words, a policy corresponding to the route is the to-be-applied moving policy. For example, a route with a highest service assurance satisfaction degree is selected from the plurality of routes for use, or a route with a shortest distance is selected from the plurality of routes for use. This is not limited.

In conclusion, the management service consumer may request the first management service provider entity to provide the moving policy from the first start point to the first end point within the first duration, and the first management service provider entity may provide the management service consumer with the first moving policy whose service assurance satisfaction degree meets the preset requirement, in other words, the network quality corresponding to the first moving policy is good, so that the network quality experienced by the terminal when the terminal moves within the first duration based on the moving policy can be ensured without affecting network quality in each region.

### Scenario 5:

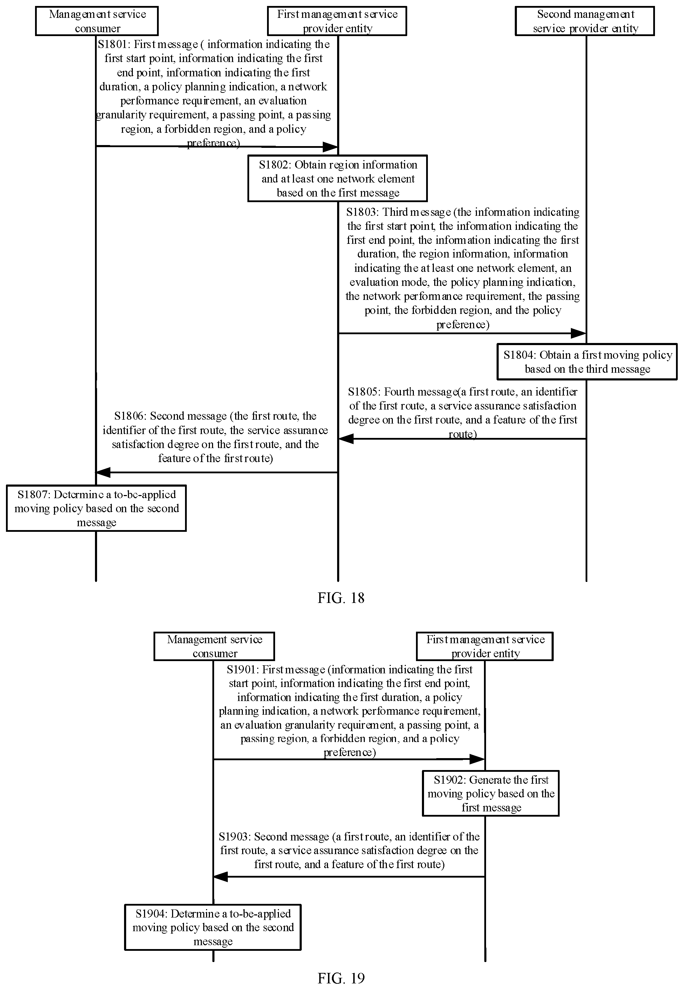

FIG. 18 is a schematic flowchart 7 of a communication method according to an embodiment of this application. The communication method is applicable to the foregoing communication system, and mainly relates to the management service consumer, the first management service provider entity, and the second management service provider entity. In the scenario 5, the management service consumer may request the first management service provider entity to provide a moving policy from a first start point to a first end point within first duration, and the first management service provider entity may obtain a first moving policy from the second management service provider entity, and send the first moving policy to the management service consumer.

As shown in FIG. 18, a procedure for the communication method is as follows:
S1801: The management service consumer sends a first message to the first management service provider entity. Correspondingly, the first management service provider entity receives the first message from the management service consumer.

The first message is for requesting to provide the moving policy from the first start point to the first end point within the first duration, and the first message includes: information indicating the first start point, information indicating the first end point, information indicating the first duration, a policy planning indication, a network performance requirement, an evaluation granularity requirement, a passing point, a passing region, a forbidden region, and a policy preference. For details about the first message, refer to the related descriptions of "S1501" above, and the details are not described herein again.

S1802: The first management service provider entity obtains region information and at least one network element based on the first message.

Specifically, the first management service provider entity may determine a first region based on the information indicating the first start point and the information indicating the first end point, and divide the first region into a plurality of grids, to obtain the region information; and obtain, based on the first region, the at least one network element whose service range covers the first region.

S1803: The first management service provider entity sends a third message to the second management service provider entity. Correspondingly, the second management service provider entity receives the third message from the first management service provider entity.

The third message is for requesting to provide the moving policy from the first start point to the first end point within the first duration, and the third message includes: the information indicating the first start point, the information indicating the first end point, the information indicating the first duration, the region information, information indicating the at least one network element, an evaluation mode, the policy planning indication, the network performance requirement, the passing point, the forbidden region, and the policy preference. For details about the third message, refer to the related descriptions of "S1502" above, and the details are not described herein again.

S1804: The second management service provider entity obtains the first moving policy based on the third message.

Specifically, the second management service provider entity constructs a network twin model based on the region information and the information indicating the at least one network element. The second management service provider entity obtains the first moving policy by using the network twin model based on the third message.

S1805: The second management service provider entity sends a fourth message to the first management service provider entity. Correspondingly, the first management service provider entity receives the fourth message from the second management service provider entity.

The fourth message indicates the first moving policy, and the fourth message may include: a first route, an identifier of the first route, a service assurance satisfaction degree on the first route, and a feature of the first route.

S1806: The first management service provider entity sends a second message to the management service consumer. Correspondingly, the management service consumer receives the second message from the first management service provider entity.

The second message indicates the first moving policy, and the second message may include: the first route, the identifier of the first route, the service assurance satisfaction degree on the first route, and the feature of the first route.

S1807: The management service consumer determines a to-be-applied moving policy based on the second message.

It may be understood that for specific implementations of S1801 to S1807, refer to the related descriptions of S1501 to S1503 above. Details are not described herein again.

### Scenario 6:

FIG. 19 is a schematic flowchart 8 of a communication method according to an embodiment of this application. The communication method is applicable to the foregoing communication system, and mainly relates to the management service consumer, the first management service provider entity, and the second management service provider entity. In the scenario 6, the management service consumer may request the first management service provider entity to provide a moving policy from a first start point to a first end point within first duration, and the first management service provider entity generates a first moving policy, and sends the first moving policy to the management service consumer.

As shown in FIG. 19, a procedure for the communication method is as follows:
S1901: The management service consumer sends a first message to the first management service provider entity. Correspondingly, the first management service provider entity receives the first message from the management service consumer.

The first message is for requesting to provide the moving policy from the first start point to the first end point within the first duration, and the first message includes: information indicating the first start point, information indicating the first end point, information indicating the first duration, a policy planning indication, a network performance requirement, an evaluation granularity requirement, a passing point, a passing region, a forbidden region, and a policy preference. For details about the first message, refer to the related descriptions of "S1501" above, and the details are not described herein again.

S1902: The first management service provider entity generates the first moving policy based on the first message.

S1903: The first management service provider entity sends a second message to the management service consumer. Correspondingly, the management service consumer receives the second message from the first management service provider entity.

The second message indicates the first moving policy, and the second message may include: a first route, an identifier of the first route, a service assurance satisfaction degree on the first route, and a feature of the first route.

S1904: The management service consumer determines a to-be-applied moving policy based on the second message.

It may be understood that for specific implementations of S1901 to S1904, refer to the related descriptions of S1501 to S1503 above. Details are not described herein again.

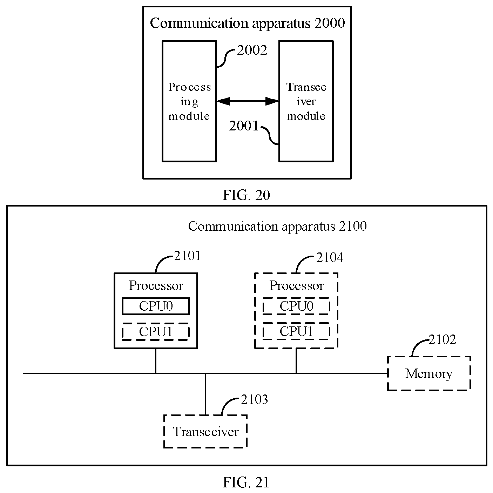

With reference to FIG. 4 to FIG. 19, the foregoing describes in detail the communication methods provided in embodiments of this application. With reference to FIG. 20 and FIG. 21, the following describes in detail communication apparatuses configured to perform the communication methods provided in embodiments of this application.

FIG. 20 is a diagram 1 of a structure of a communication apparatus according to an embodiment of this application. For example, as shown in FIG. 20, the communication apparatus 2000 includes a transceiver module 2001 and a processing module 2002. For ease of description, FIG. 20 shows only main components of the communication apparatus.

In some embodiments, the communication apparatus 2000 may be used in the communication system shown in FIG. 3, and perform a function of the first management service provider entity in the communication method shown in FIG. 4.

The transceiver module 2001 is configured to receive a first message from the management service consumer. The processing module 2002 is configured to send, to the management service consumer based on the first message, a second message indicating a first service assurance satisfaction degree. The first message is for requesting to evaluate a service assurance satisfaction degree in a first region within first duration, the service assurance satisfaction degree represents a degree of matching between network performance and a network performance requirement, and the first service assurance satisfaction degree represents a degree of matching between network performance in the first region within the first duration and the network performance requirement.

In a possible design scheme, the first message includes at least one of the following: information indicating the first region or information indicating the first duration.

In a possible design scheme, the first message includes at least one of the following: an evaluation mode, an evaluation granularity requirement, or the network performance requirement, where the evaluation mode indicates to divide a region into a plurality of grids, and reflect a service assurance satisfaction degree in the region at a grid granularity, and the evaluation granularity requirement indicates a size of a plurality of grids included in a region.

In a possible design scheme, the first region includes a plurality of first grids, the first message is specifically for requesting to evaluate respective service assurance satisfaction degrees in the plurality of first grids, time periods for evaluating the service assurance satisfaction degrees in the plurality of first grids are at least partially different, and the time periods are within the first duration.

In a possible design scheme, the first message includes at least one of the following: a continuous-evaluation indication, a first time interval, a second time interval, a reporting event, or a moving speed, where the continuous-evaluation indication indicates that time periods for respectively evaluating service assurance satisfaction degrees in a plurality of grids included in a region are at least partially different; the first time interval indicates a difference between time periods for evaluating service satisfaction degrees in two grids, and the two grids are two neighboring grids that are in a plurality of grids included in a region and in which the service satisfaction degrees are evaluated within different time periods; the second time interval is a time difference between every two consecutive times of reporting a service assurance satisfaction degree in a region when the service assurance satisfaction degree in the region is periodically reported; the reporting event indicates that reporting of a service assurance satisfaction degree in a region is triggered based on a preset event that occurs in a process of evaluating the service assurance satisfaction degree in the region; and the moving speed indicates a moving speed in a region.

In a possible design scheme, the second message includes a service assurance satisfaction degree in each first grid in the plurality of first grids included in the first region.

In a possible design scheme, the second message includes at least one of the following: respective identifiers of the plurality of first grids, the respective service assurance satisfaction degrees in the plurality of first grids, respective locations of the plurality of first grids, or time information, where the time information indicates a time period for evaluating the service assurance satisfaction degree in each first grid in the plurality of first grids.

In a possible design scheme, the processing module 2002 is specifically configured to: obtain the first service assurance satisfaction degree from the second management service provider entity based on the first message, and send the second message to the management service consumer based on the first service assurance satisfaction degree.

Optionally, the processing module 2002 is specifically configured to send a third message to the second management service provider entity based on the first message, where the third message is for requesting to evaluate the service assurance satisfaction degree in the first region within the first duration. The transceiver module 2001 is specifically configured to receive a fourth message from the second management service provider entity, where the fourth message indicates the first service assurance satisfaction degree.

Further, the third message includes at least one of the following: the information indicating the first duration, region information, or information indicating at least one network element, where the region information indicates the plurality of first grids obtained by dividing the first region, and a service range of the at least one network element includes the first region.

Further, the region information includes at least one of the following: the respective identifiers of the plurality of first grids, a size of the plurality of first grids, or the respective locations of the plurality of first grids.

Further, the third message includes at least one of the following: the evaluation mode or the network performance requirement, where the evaluation mode indicates to divide a region into a plurality of grids, and reflect a service assurance satisfaction degree in the region at a grid granularity.

Further, the first region includes the plurality of first grids, the third message is specifically for requesting to evaluate the respective service assurance satisfaction degrees in the plurality of first grids, the time periods for evaluating the service assurance satisfaction degrees in the plurality of first grids are at least partially different, and the time periods are within the first duration.

Further, the third message includes at least one of the following: the continuous-evaluation indication, the first time interval, the second time interval, the reporting event, or the moving speed, where the continuous-evaluation indication indicates that time periods for respectively evaluating service assurance satisfaction degrees in a plurality of grids included in a region are at least partially different; the first time interval indicates a difference between time periods for evaluating service satisfaction degrees in two grids, and the two grids are two neighboring grids that are in a plurality of grids included in a region and in which the service satisfaction degrees are evaluated within different time periods; the second time interval indicates a time difference between every two consecutive times of reporting a service assurance satisfaction degree in a region when the service assurance satisfaction degree in the region is periodically reported; the reporting event indicates that reporting of a service assurance satisfaction degree in a region is triggered based on a preset event that occurs in a process of evaluating the service assurance satisfaction degree in the region; and the moving speed indicates a moving speed in a region.

Further, the fourth message includes the service assurance satisfaction degree in each first grid in the plurality of first grids included in the first region.

Further, the fourth information includes at least one of the following: the respective identifiers of the plurality of first grids, the respective service assurance satisfaction degrees in the plurality of first grids, or the time information, where the time information indicates the time period for evaluating the service assurance satisfaction degree in each first grid in the plurality of first grids.

Optionally, the transceiver module 2001 may include a sending module (not shown in FIG. 20) and a receiving module (not shown in FIG. 20). The sending module is configured to implement a sending function of the communication apparatus 2000, and the receiving module is configured to implement a receiving function of the communication apparatus 2000.

Optionally, the communication apparatus 2000 may further include a storage module (not shown in FIG. 20), and the storage module stores a program or instructions. When the processing module 2002 executes the program or the instructions, the communication apparatus 2000 is caused to perform the function of the first management service provider entity in the method shown in FIG. 4 in the foregoing methods.

It may be understood that the communication apparatus 2000 may be a network device, for example, the first management service provider entity, may be a chip (system) or another part or component that may be disposed in the network device, or may be an apparatus that includes the network device. This is not limited in this application.

In addition, for technical effects of the communication apparatus 2000, refer to the technical effects of the communication method shown in FIG. 4. Details are not described herein again.

In some other embodiments, the communication apparatus 2000 may be used in the communication system shown in FIG. 3, and perform a function of the management service consumer in the method shown in FIG. 4.

The transceiver module 2001 is configured to: send a first message to the first management service provider entity, and receive, from the first management service provider entity, a second message indicating a first service assurance satisfaction degree. The processing module 2002 is configured to determine a moving policy in a first region within first duration based on the second message. The first message is for requesting to evaluate a service assurance satisfaction degree in the first region within the first duration, the service assurance satisfaction degree represents a degree of matching between network performance and a network performance requirement, and the first service assurance satisfaction degree represents a degree of matching between network performance in the first region within the first duration and the network performance requirement.

In a possible design scheme, the first message includes at least one of the following: information indicating the first region or information indicating the first duration.

In a possible design scheme, the first message includes at least one of the following: an evaluation mode, an evaluation granularity requirement, or the network performance requirement, where the evaluation mode indicates to divide a region into a plurality of grids, and reflect a service assurance satisfaction degree in the region at a grid granularity, and the evaluation granularity requirement indicates a size of a plurality of grids included in a region.

In a possible design scheme, the first region includes a plurality of first grids, the first message is specifically for requesting to evaluate respective service assurance satisfaction degrees in the plurality of first grids, time periods for evaluating the service assurance satisfaction degrees in the plurality of first grids are at least partially different, and the time periods are within the first duration.

In a possible design scheme, the first message includes at least one of the following: a continuous-evaluation indication, a first time interval, a second time interval, a reporting event, or a moving speed, where the continuous-evaluation indication indicates that time periods for respectively evaluating service assurance satisfaction degrees in a plurality of grids included in a region are at least partially different; the first time interval indicates a difference between time periods for evaluating service satisfaction degrees in two grids, and the two grids are two neighboring grids that are in a plurality of grids included in a region and in which the service satisfaction degrees are evaluated within different time periods; the second time interval is a time difference between every two consecutive times of reporting a service assurance satisfaction degree in a region when the service assurance satisfaction degree in the region is periodically reported; the reporting event indicates that reporting of a service assurance satisfaction degree in a region is triggered based on a preset event that occurs in a process of evaluating the service assurance satisfaction degree in the region; and the moving speed indicates a moving speed in a region.

In a possible design scheme, the second message includes a service assurance satisfaction degree in each first grid in the plurality of first grids included in the first region.

In a possible design scheme, the second message includes at least one of the following: respective identifiers of the plurality of first grids, the respective service assurance satisfaction degrees in the plurality of first grids, respective locations of the plurality of first grids, or time information, where the time information indicates a time period for evaluating the service assurance satisfaction degree in each first grid in the plurality of first grids.

Optionally, the transceiver module 2001 may include a sending module (not shown in FIG. 20) and a receiving module (not shown in FIG. 20). The sending module is configured to implement a sending function of the communication apparatus 2000, and the receiving module is configured to implement a receiving function of the communication apparatus 2000.

Optionally, the communication apparatus 2000 may further include a storage module (not shown in FIG. 20), and the storage module stores a program or instructions. When the processing module 2002 executes the program or the instructions, the communication apparatus 2000 is caused to perform the function of the management service consumer in the method shown in FIG. 4 in the foregoing methods.

It may be understood that the communication apparatus 2000 may be a network device, for example, the management service consumer, may be a chip (system) or another part or component that may be disposed in the network device, or may be an apparatus that includes the network device. This is not limited in this application.

In addition, for technical effects of the communication apparatus 2000, refer to the technical effects of the communication method shown in FIG. 4. Details are not described herein again.

In some other embodiments, the transceiver module 2001 is configured to perform receiving and sending functions in the methods shown in FIG. 4 to FIG. 19, and the processing module 2002 is configured to perform a function other than the receiving and sending functions in the methods shown in FIG. 4 to FIG. 19.

Optionally, the transceiver module 2001 may include a sending module (not shown in FIG. 20) and a receiving module (not shown in FIG. 20). The sending module is configured to implement a sending function of the communication apparatus 2000, and the receiving module is configured to implement a receiving function of the communication apparatus 2000.

Optionally, the communication apparatus 2000 may further include a storage module (not shown in FIG. 20), and the storage module stores a program or instructions. When the processing module 2002 executes the program or the instructions, the communication apparatus 2000 is caused to perform a function of the first management service provider entity, the second management service provider entity, or the management service consumer in the methods shown in FIG. 4 to FIG. 19 in the foregoing methods.

It may be understood that the communication apparatus 2000 may be a network device, for example, the first management service provider entity, the second management service provider entity, or the management service consumer, may be a chip (system) or another part or component that may be disposed in the network device, or may be an apparatus that includes the network device. This is not limited in this application.

FIG. 21 is a diagram 2 of a structure of a communication apparatus according to an embodiment of this application. For example, the communication apparatus may be a network device, for example, a first management service provider entity, a second management service provider entity, or a management service consumer, or may be a chip (system) or another part or component that may be disposed in the network device. As shown in FIG. 21, the communication apparatus 2100 may include a processor 2101. Optionally, the communication apparatus 2100 may further include a memory 2102 and/or a transceiver 2103. The processor 2101 is coupled to the memory 2102 and the transceiver 2103, for example, may be connected through a communication bus.

The following specifically describes the components of the communication apparatus 2100 with reference to FIG. 21.

The processor 2101 is a control center of the communication apparatus 2100, and may be one processor, or may be a collective name of a plurality of processing elements. For example, the processor 2101 is one or more central processing units (central processing units, CPUs), may be an application-specific integrated circuit (application-specific integrated circuit, ASIC), or is configured as one or more integrated circuits for implementing embodiments of this application, for example, one or more digital signal processors (digital signal processors, DSPs), or one or more field programmable gate arrays (field programmable gate arrays, FPGAs).

Optionally, the processor 2101 may run or execute a software program stored in the memory 2102, and invoke data stored in the memory 2102, to perform various functions of the communication apparatus 2100, for example, perform the communication methods shown in FIG. 4 to FIG. 19.

During specific implementation, in an embodiment, the processor 2101 may include one or more CPUs, for example, a CPU 0 and a CPU 1 shown in FIG. 21.

During specific implementation, in an embodiment, the communication apparatus 2100 may alternatively include a plurality of processors, such as the processor 2101 and a processor 2104 shown in FIG. 21. Each of the processors may be a single-core (single-CPU) processor, or may be a multi-core (multi-CPU) processor. The processor herein may be one or more devices, circuits, and/or processing cores configured to process data (for example, computer program instructions).

The memory 2102 is configured to store a software program for executing the solutions of this application, and the processor 2101 controls the execution. For a specific implementation, refer to the foregoing method embodiments. Details are not described herein again.

Optionally, the memory 2102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of an instruction or a data structure and that can be accessed by a computer, but is not limited thereto. The memory 2102 may be integrated with the processor 2101; or may exist independently, and is coupled to the processor 2101 through an interface circuit (not shown in FIG. 21) of the communication apparatus 2100. This is not specifically limited in this embodiment of this application.

The transceiver 2103 is configured to communicate with another communication apparatus. For example, the communication apparatus 2100 is a terminal, and the transceiver 2103 may be configured to communicate with a network apparatus or communicate with another terminal apparatus. For another example, the communication apparatus 2100 is a network apparatus, and the transceiver 2103 may be configured to communicate with a terminal or communicate with another network apparatus.

Optionally, the transceiver 2103 may include a receiver and a transmitter (not separately shown in FIG. 21). The receiver is configured to implement a receiving function, and the transmitter is configured to implement a sending function.

Optionally, the transceiver 2103 may be integrated with the processor 2101; or may exist independently, and is coupled to the processor 2101 through an interface circuit (not shown in FIG. 21) of the communication apparatus 2100. This is not specifically limited in this embodiment of this application.

It may be understood that the structure of the communication apparatus 2100 shown in FIG. 21 does not constitute a limitation on the communication apparatus. An actual communication apparatus may include more or fewer components than those shown in the figure, combine some components, or have different component arrangements.

In addition, for technical effects of the communication apparatus 2100, refer to the technical effects of the methods in the foregoing method embodiments. Details are not described herein again.

It should be understood that, the processor in embodiments of this application may be a CPU, or the processor may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. By way of example but not limitative description, a plurality of forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement the foregoing embodiments, the foregoing embodiments may be implemented completely or partially in a form of a computer program product. The computer program product includes one or more computer instructions or computer programs. When the computer instructions or the computer programs are loaded and executed on a computer, the procedures or functions according to embodiments of this application are completely or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification generally represents an "or" relationship between associated objects, but may alternatively represent an "and/or" relationship. For details, refer to context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the prior art, or some of the technical solutions may be implemented in a form of a software product. The computer software product is stored in a storage medium, and includes several instructions for instructing a computer device (which may be a personal computer, a server, a network apparatus, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a first management service provider entity, a first message from a management service consumer, wherein the first message is for requesting to evaluate a service assurance satisfaction degree in a first region within first duration, and the service assurance satisfaction degree represents a degree of matching between network performance and a network performance requirement; and
sending, by the first management service provider entity to the management service consumer based on the first message, a second message indicating a first service assurance satisfaction degree, wherein the first service assurance satisfaction degree represents a degree of matching between network performance in the first region within the first duration and the network performance requirement.

2. The method according to claim 1, wherein the sending, by the first management service provider entity to the management service consumer based on the first message, the second message indicating the first service assurance satisfaction degree comprises:
obtaining, by the first management service provider entity, the first service assurance satisfaction degree from a second management service provider entity based on the first message; and
sending, by the first management service provider entity, the second message to the management service consumer based on the first service assurance satisfaction degree.

3. The method according to claim 2, wherein the obtaining, by the first management service provider entity, the first service assurance satisfaction degree from the second management service provider entity based on the first message comprises:
sending, by the first management service provider entity, a third message to the second management service provider entity based on the first message, wherein the third message is for requesting to evaluate the service assurance satisfaction degree in the first region within the first duration; and
receiving, by the first management service provider entity, a fourth message from the second management service provider entity, wherein the fourth message indicates the first service assurance satisfaction degree.

4. The method according to claim 3, wherein the third message comprises at least one of the following: information indicating the first duration, region information, or information indicating at least one network element, wherein the region information indicates a plurality of first grids obtained by dividing the first region, and a service range of the at least one network element comprises the first region.

5. The method according to claim 4, wherein the region information comprises at least one of the following: respective identifiers of the plurality of first grids, a size of the plurality of first grids, or respective locations of the plurality of first grids.

6. The method according to any one of claims 3 to 5, wherein the third message comprises at least one of the following: an evaluation mode or the network performance requirement, wherein the evaluation mode indicates to divide a region into a plurality of grids, and reflect a service assurance satisfaction degree in the region at a grid granularity.

7. The method according to any one of claims 3 to 6, wherein the first region comprises the plurality of first grids, the third message is specifically for requesting to evaluate respective service assurance satisfaction degrees in the plurality of first grids, time periods for evaluating the service assurance satisfaction degrees in the plurality of first grids are at least partially different, and the time periods are within the first duration.

8. The method according to any one of claims 3 to 7, wherein the third message comprises at least one of the following: a continuous-evaluation indication, a first time interval, a second time interval, a reporting event, or a moving speed, wherein the continuous-evaluation indication indicates that time periods for respectively evaluating service assurance satisfaction degrees in a plurality of grids comprised in a region are at least partially different; the first time interval indicates a difference between time periods for evaluating service satisfaction degrees in two grids, and the two grids are two neighboring grids that are in a plurality of grids comprised in a region and in which the service satisfaction degrees are evaluated within different time periods; the second time interval indicates a time difference between every two consecutive times of reporting a service assurance satisfaction degree in a region when the service assurance satisfaction degree in the region is periodically reported; the reporting event indicates that reporting of a service assurance satisfaction degree in a region is triggered based on a preset event that occurs in a process of evaluating the service assurance satisfaction degree in the region; and the moving speed indicates a moving speed in a region.

9. The method according to any one of claims 3 to 8, wherein the fourth message comprises a service assurance satisfaction degree in each first grid in the plurality of first grids comprised in the first region.

10. The method according to any one of claims 3 to 9, wherein the fourth message comprises at least one of the following: the respective identifiers of the plurality of first grids, the respective service assurance satisfaction degrees in the plurality of first grids, or time information, wherein the time information indicates a time period for evaluating the service assurance satisfaction degree in each first grid in the plurality of first grids.

11. A communication method, wherein the method comprises:
sending, by a management service consumer, a first message to a first management service provider entity, wherein the first message is for requesting to evaluate a service assurance satisfaction degree in a first region within first duration, and the service assurance satisfaction degree represents a degree of matching between network performance and a network performance requirement;
receiving, by the management service consumer from the first management service provider entity, a second message indicating a first service assurance satisfaction degree, wherein the first service assurance satisfaction degree represents a degree of matching between network performance in the first region within the first duration and the network performance requirement; and
determining, by the management service consumer, a moving policy in the first region within the first duration based on the second message.

12. The method according to any one of claims 1 to 11, wherein the first message comprises at least one of the following: information indicating the first region or the information indicating the first duration.

13. The method according to any one of claims 1 to 12, wherein the first message comprises at least one of the following: the evaluation mode, an evaluation granularity requirement, or the network performance requirement, wherein the evaluation mode indicates to divide a region into a plurality of grids, and reflect a service assurance satisfaction degree in the region at a grid granularity, and the evaluation granularity requirement indicates a size of a plurality of grids comprised in a region.

14. The method according to any one of claims 1 to 13, wherein the first region comprises the plurality of first grids, the first message is specifically for requesting to evaluate the respective service assurance satisfaction degrees in the plurality of first grids, the time periods for evaluating the service assurance satisfaction degrees in the plurality of first grids are at least partially different, and the time periods are within the first duration.

15. The method according to any one of claims 1 to 14, wherein the first message comprises at least one of the following: the continuous-evaluation indication, the first time interval, the second time interval, the reporting event, or the moving speed, wherein the continuous-evaluation indication indicates that time periods for respectively evaluating service assurance satisfaction degrees in a plurality of grids comprised in a region are at least partially different; the first time interval indicates a difference between time periods for evaluating service satisfaction degrees in two grids, and the two grids are two neighboring grids that are in a plurality of grids comprised in a region and in which the service satisfaction degrees are evaluated within different time periods; the second time interval is a time difference between every two consecutive times of reporting a service assurance satisfaction degree in a region when the service assurance satisfaction degree in the region is periodically reported; the reporting event indicates that reporting of a service assurance satisfaction degree in a region is triggered based on a preset event that occurs in a process of evaluating the service assurance satisfaction degree in the region; and the moving speed indicates a moving speed in a region.

16. The method according to any one of claims 1 to 15, wherein the second message comprises the service assurance satisfaction degree in each first grid in the plurality of first grids comprised in the first region.

17. The method according to any one of claims 1 to 16, wherein the second message comprises at least one of the following: the respective identifiers of the plurality of first grids, the respective service assurance satisfaction degrees in the plurality of first grids, the respective locations of the plurality of first grids, or the time information, wherein the time information indicates the time period for evaluating the service assurance satisfaction degree in each first grid in the plurality of first grids.

18. A communication method, wherein the method comprises:
performing, by a first management service provider entity, the method according to any one of claims 1 to 10 or 12 to 17; and
performing, by a management service consumer, the method according to any one of claims 11 to 17.

19. A communication apparatus, wherein the apparatus comprises a module configured to perform the method according to any one of claims 1 to 17.

20. A communication apparatus, wherein the communication apparatus comprises a processor and a memory, wherein the memory is configured to store computer instructions; and when the processor executes the instructions, the communication apparatus is caused to perform the method according to any one of claims 1 to 17.

21. A communication system, comprising a first management service provider entity configured to perform the method according to any one of claims 1 to 10 or 12 to 17 and a management service consumer configured to perform the method according to any one of claims 11 to 17.

22. A communication chip, wherein the communication chip stores instructions; and when the chip runs on a communication device, the method according to any one of claims 1 to 17 is implemented.

23. A computer-readable storage medium, wherein the computer-readable storage medium comprises a computer program or instructions; and when the computer program or the instructions are run on a computer, the computer is caused to perform the method according to any one of claims 1 to 17.

24. A computer program product, wherein the computer program product comprises a computer program or instructions; and when the computer program or the instructions are run on a communication apparatus, the method according to any one of claims 1 to 17 is performed.
